# EUROPEAN PATENT APPLICATION

(11) **EP 4 808 219 A1**
(43) Date of publication of application: **16.09.2026**
(21) Application number: 24895732.6
(22) Date of filing: 07.08.2024
(51) Int. Cl.: H04W 52/02

(54) **ENABLE SIGNAL CONTROL METHOD, DEVICE, AND STORAGE MEDIUM**

(30) Priority: 30.11.2023 CN 202311632184
(71) Applicant: Honor Device Co., Ltd., Shenzhen, Guangdong 518040 (CN)
(72) Inventor: LIU, Dongping, Shenzhen, Guangdong 518040 (CN); SHI, Shaohong, Shenzhen, Guangdong 518040 (CN)
(74) Representative: Isarpatent
(86) International application number: PCT/CN2024/110388
(87) International publication number: WO 2025/112629

(57) **Abstract**

An enable signal control method, a device, and a storage medium are provided. In the method, a second duty cycle is determined when it is detected that a current carrier-to-noise ratio of a satellite signal is outside a preset range, where when an enable signal with the second duty cycle is used to control an amplifier, a carrier-to-noise ratio of the satellite signal is within the preset range. In addition, when the second duty cycle is less than a first duty cycle, a duty cycle of the enable signal is adjusted from the first duty cycle to the second duty cycle, and the amplifier is controlled based on the enable signal with the second duty cycle. Power consumption of an electronic device can be reduced without affecting performance benefits of a GNSS receiver.

## Description

This application claims priority to Chinese Patent Application No. 202311632184.9, filed with the China National Intellectual Property Administration on November 30, 2023 and entitled "ENABLE SIGNAL CONTROL METHOD, DEVICE, AND STORAGE MEDIUM", which is incorporated herein by reference in its entirety.

### TECHNICAL FIELD

This application relates to the field of terminal technologies, and in particular, to an enable signal control method, a device, and a storage medium.

### BACKGROUND

As the application of an internet of things technology and the use of a positioning service (LBS)-based electronic device (for example, a wearable device) increase, the market has an increasing demand for a global navigation satellite system (Global Navigation Satellite System, GNSS).

In an implementation, GNSS positioning performance is related to a carrier-to-noise ratio. As the carrier-to-noise ratio increases, a positioning error caused by noise of a GNSS receiver gradually decreases. When a positioning error caused by another error source such as multipath remains unchanged, an increase in the carrier-to-noise ratio results in a diminishing margin for an improvement in GNSS positioning precision (or referred to as GNSS performance benefits). In addition, when a positioning function of the electronic device is used, power consumption of the electronic device is high. Therefore, how to reduce the power consumption without affecting the GNSS performance benefits is a problem that needs to be resolved urgently.

### SUMMARY

This application provides an enable signal control method, a device, and a storage medium, to reduce power consumption of an electronic device without affecting performance benefits of a GNSS receiver.

According to a first aspect, an embodiment of this application provides an enable signal control method. The method includes: controlling an amplifier based on an enable signal with a first duty cycle; determining a second duty cycle when it is detected that a current carrier-to-noise ratio of a satellite signal is outside a preset range, where when an enable signal with the second duty cycle is used to control the amplifier, a carrier-to-noise ratio of the satellite signal is within the preset range; and if the second duty cycle is less than the first duty cycle, controlling the amplifier based on the enable signal with the second duty cycle. In this way, when it is detected that the current carrier-to-noise ratio of the satellite signal is outside the preset range, the second duty cycle is determined, and when the enable signal with the second duty cycle is used to control an LNA, the carrier-to-noise ratio of the satellite signal is within the preset range. This can avoid impact on performance benefits of a GNSS receiver. In addition, when the second duty cycle is less than the first duty cycle, a duty cycle of the enable signal may be adjusted from the first duty cycle that is high to the second duty cycle that is low, to reduce power consumption of an electronic device. Therefore, in the solution of this application, the power consumption of the electronic device can be reduced without affecting the performance benefits of the GNSS receiver. In addition, compared with a solution in which the enable signal with the first duty cycle is used to control the amplifier all the time, in the solution of this application, the duty cycle of the enable signal may be adaptively adjusted, so that operating duration of the amplifier in an operating cycle can be adaptively adjusted. The solution of this application is more flexible and compatible.

With reference to the first aspect, in an optional implementation, determining the second duty cycle includes: if the current carrier-to-noise ratio is greater than a maximum value of the preset range, obtaining the second duty cycle based on the current carrier-to-noise ratio, the first duty cycle, and the maximum value of the preset range. In this way, when the current carrier-to-noise ratio is greater than the maximum value of the preset range, the maximum value of the preset range is considered when the second duty cycle is determined, so that the second duty cycle may be less than the first duty cycle, and when the enable signal with the second duty cycle is used to control the LNA, the carrier-to-noise ratio of the satellite signal is within the preset range. Therefore, the power consumption of the electronic device can be reduced without affecting the performance benefits of the GNSS receiver.

With reference to the first aspect, in an optional implementation, obtaining the second duty cycle based on the current carrier-to-noise ratio, the first duty cycle, and the maximum value of the preset range includes: determining a first carrier-to-noise ratio difference, where the first carrier-to-noise ratio difference is a carrier-to-noise ratio difference corresponding to the first duty cycle; determining a second carrier-to-noise ratio difference based on the current carrier-to-noise ratio, the first carrier-to-noise ratio difference, and the maximum value of the preset range; and determining the second duty cycle, where the second duty cycle is a duty cycle corresponding to the second carrier-to-noise ratio difference. A carrier-to-noise ratio difference is a difference between a carrier-to-noise ratio threshold and a carrier-to-noise ratio in a same scenario, the carrier-to-noise ratio threshold is a carrier-to-noise ratio corresponding to a 100% duty cycle, and the carrier-to-noise ratio difference includes the first carrier-to-noise ratio difference and the second carrier-to-noise ratio difference.

Optionally, when the duty cycle of the enable signal is known, a carrier-to-noise ratio difference corresponding to the duty cycle may be determined by using a first polynomial. For example, the first polynomial may be: $y = - 46.67 {x}^{3} + 97.85 {x}^{2} - 72.16 x + 20.87$

x represents the duty cycle of the enable signal, and y represents the carrier-to-noise ratio difference.

Optionally, when the carrier-to-noise ratio difference is known, a duty cycle corresponding to the carrier-to-noise ratio difference may be determined by using a second polynomial.

For example, the second polynomial may be: $y = - 0.0003 {x}^{3} + 0.0115 {x}^{2} - 0.1706 x + 1.0113$

x represents the carrier-to-noise ratio difference, and y represents the duty cycle of the enable signal.

Optionally, when it is known that the duty cycle of the enable signal is x₀, a corresponding carrier-to-noise ratio difference may be obtained by using the following expression: ${y}_{0} = \frac{{x}_{0} - {x}_{a}}{{x}_{b} - {x}_{a}} \times \left({y}_{b}-{y}_{a}\right) + {y}_{a}$

x₀, xₐ, and x_{b} represent duty cycles of the enable signal, and y₀, yₐ, and y_{b} represent corresponding carrier-to-noise ratio differences.

For another example, when it is known that the carrier-to-noise ratio difference is y₀, a corresponding duty cycle of the enable signal may be obtained by using the following expression: ${y}_{0} = \frac{{y}_{0} - {y}_{m}}{{y}_{n} - {y}_{m}} \times \left({x}_{n}-{x}_{m}\right) + {x}_{m}$

y₀, yₘ, and yₙ represent carrier-to-noise ratio differences, and x₀, xₘ, and xₙ represent corresponding duty cycles of the enable signal.

In this way, the second duty cycle may be determined based on a one-to-one correspondence between a duty cycle of the enable signal and a carrier-to-noise ratio difference.

With reference to the first aspect, in an optional implementation, determining the second carrier-to-noise ratio difference based on the current carrier-to-noise ratio, the first carrier-to-noise ratio difference, and the maximum value of the preset range includes: determining a carrier-to-noise ratio threshold based on the current carrier-to-noise ratio and the first carrier-to-noise ratio difference; determining a first difference based on the maximum value of the preset range and the current carrier-to-noise ratio; and determining the second carrier-to-noise ratio difference based on the carrier-to-noise ratio threshold and the first difference, where the first difference is a difference between the maximum value of the preset range and the current carrier-to-noise ratio.

Optionally, the second carrier-to-noise ratio difference may be specifically determined by using the following formula: ${y}_{2} = CN 0 + {y}_{1} - \left({CN 0}_{max}-CN0\right)$

y₂ represents the second carrier-to-noise ratio difference. CN0 represents the current carrier-to-noise ratio. y₁ represents the first carrier-to-noise ratio difference. CN0ₘₐₓ represents the maximum value of the preset range.

With reference to the first aspect, in an optional implementation, the method further includes: detecting whether satellite ephemeris is valid; and if the satellite ephemeris is invalid, updating the satellite ephemeris; or if the satellite ephemeris is valid, controlling the amplifier based on the enable signal with the second duty cycle when the second duty cycle is less than the first duty cycle. In this way, if the satellite ephemeris is valid, the satellite ephemeris does not need to be updated, and if the satellite ephemeris becomes invalid, the satellite ephemeris needs to be updated. Updating the satellite ephemeris in time can ensure positioning performance.

In an optional implementation, the method specifically includes: determining whether a current moment is within a valid time range of the satellite ephemeris. If the current moment is not within the valid time range of the satellite ephemeris, the satellite ephemeris needs to be updated; or if the current moment is within the valid time range of the satellite ephemeris, the satellite ephemeris does not need to be updated.

With reference to the first aspect, in an optional implementation, updating the satellite ephemeris includes: controlling the amplifier based on an enable signal with the 100% duty cycle; and receiving satellite ephemeris from a satellite, and updating the satellite ephemeris based on the received satellite ephemeris. In this implementation, the satellite ephemeris may be directly received from the satellite. When the satellite ephemeris is received from the satellite, the duty cycle of the enable signal may be increased to 100%, to increase the operating duration of the LNA to the entire operating cycle. This helps improve a success rate of the electronic device in receiving the satellite ephemeris from the satellite.

With reference to the first aspect, in an optional implementation, updating the satellite ephemeris includes: detecting whether the electronic device is within a mobile communication range; if the electronic device is outside the mobile communication range, controlling the amplifier based on an enable signal with the 100% duty cycle; and receiving satellite ephemeris from a satellite, and updating the satellite ephemeris based on the received satellite ephemeris. In this implementation, when the satellite ephemeris becomes invalid, and the electronic device is outside the mobile communication range, the electronic device may receive the satellite ephemeris from the satellite. This helps the electronic device successfully receive the satellite ephemeris when the electronic device is outside the mobile communication range.

With reference to the first aspect, in an optional implementation, after detecting whether the electronic device is within the mobile communication range, the method further includes: if the electronic device is within the mobile communication range, receiving satellite ephemeris from a mobile communication network, and updating the satellite ephemeris based on the received satellite ephemeris. In this implementation, the satellite ephemeris may be directly received from the mobile communication network, so that time consumed for updating the satellite ephemeris is shortened.

With reference to the first aspect, in an optional implementation, if the second duty cycle is greater than or equal to the first duty cycle, the amplifier is controlled based on the enable signal with the first duty cycle. In this way, the amplifier is still controlled based on the enable signal with the first duty cycle, without adjusting the duty cycle of the enable signal. Therefore, the amplifier can be controlled by using an enable signal with a lower duty cycle, helping reduce the power consumption of the electronic device.

With reference to the first aspect, in an optional implementation, if the second duty cycle is greater than or equal to the first duty cycle, the amplifier is controlled based on the enable signal with the second duty cycle. In this way, after the amplifier is controlled by using the enable signal with the second duty cycle, the carrier-to-noise ratio of the satellite signal may be within the preset range or as close to the preset range as possible. This can avoid the impact on the performance benefits of the GNSS receiver.

With reference to the first aspect, in an optional implementation, determining the second duty cycle includes: if the current carrier-to-noise ratio is less than a minimum value of the preset range, obtaining the second duty cycle based on the current carrier-to-noise ratio, the first duty cycle, and the minimum value of the preset range. In this way, when the current carrier-to-noise ratio is less than the minimum value of the preset range, the minimum value of the preset range is considered when the second duty cycle is determined, so that the second duty cycle may be greater than the first duty cycle, and when the enable signal with the second duty cycle is used to control the amplifier, the carrier-to-noise ratio of the satellite signal is within the preset range or as close to the preset range as possible. This can avoid the impact on the performance benefits of the GNSS receiver.

According to a second aspect, an embodiment of this application provides an electronic device, including a controller.

The controller is configured to control an amplifier based on an enable signal with a first duty cycle.

The controller is configured to determine a second duty cycle when it is detected that a current carrier-to-noise ratio of a satellite signal is outside a preset range, where when an enable signal with the second duty cycle is used to control the amplifier, a carrier-to-noise ratio of the satellite signal is within the preset range.

If the second duty cycle is less than the first duty cycle, the controller is configured to control the amplifier based on the enable signal with the second duty cycle.

With reference to the second aspect, in an optional implementation, that the controller is configured to determine the second duty cycle includes:
if the current carrier-to-noise ratio is greater than a maximum value of the preset range, the controller is configured to obtain the second duty cycle based on the current carrier-to-noise ratio, the first duty cycle, and the maximum value of the preset range.

With reference to the second aspect, in an optional implementation, that the controller is configured to obtain the second duty cycle based on the current carrier-to-noise ratio, the first duty cycle, and the maximum value of the preset range includes:
the controller is configured to determine a first carrier-to-noise ratio difference, where the first carrier-to-noise ratio difference is a carrier-to-noise ratio difference corresponding to the first duty cycle;
the controller is configured to determine a second carrier-to-noise ratio difference based on the current carrier-to-noise ratio, the first carrier-to-noise ratio difference, and the maximum value of the preset range; and
the controller is configured to determine the second duty cycle, where the second duty cycle is a duty cycle corresponding to the second carrier-to-noise ratio difference.

A carrier-to-noise ratio difference is a difference between a carrier-to-noise ratio threshold and a carrier-to-noise ratio in a same scenario, the carrier-to-noise ratio threshold is a carrier-to-noise ratio corresponding to a 100% duty cycle, and the carrier-to-noise ratio difference includes the first carrier-to-noise ratio difference and the second carrier-to-noise ratio difference.

With reference to the second aspect, in an optional implementation, that the controller is configured to determine the second carrier-to-noise ratio difference based on the current carrier-to-noise ratio, the first carrier-to-noise ratio difference, and the maximum value of the preset range includes:
the controller is configured to determine a carrier-to-noise ratio threshold based on the current carrier-to-noise ratio and the first carrier-to-noise ratio difference;
the controller is configured to determine a first difference based on the maximum value of the preset range and the current carrier-to-noise ratio, where the first difference is a difference between the maximum value of the preset range and the current carrier-to-noise ratio; and
the controller is configured to determine the second carrier-to-noise ratio difference based on the carrier-to-noise ratio threshold and the first difference.

With reference to the second aspect, in an optional implementation, after the controller is configured to determine the second duty cycle, if the second duty cycle is greater than or equal to the first duty cycle, the controller is configured to control the amplifier based on the enable signal with the first duty cycle.

With reference to the second aspect, in an optional implementation, after the controller is configured to determine the second duty cycle, if the second duty cycle is greater than or equal to the first duty cycle, the controller is configured to control the amplifier based on the enable signal with the second duty cycle.

With reference to the second aspect, in an optional implementation, that the controller is configured to determine the second duty cycle includes: if the current carrier-to-noise ratio is less than a minimum value of the preset range, the controller is configured to obtain the second duty cycle based on the current carrier-to-noise ratio, the first duty cycle, and the minimum value of the preset range.

With reference to the second aspect, in an optional implementation, the electronic device further includes an antenna, and the antenna is configured to receive the satellite signal.

With reference to the second aspect, in an optional implementation, the electronic device further includes the amplifier, and the amplifier is configured to perform amplification processing on the satellite signal.

With reference to the second aspect, in an optional implementation, the electronic device further includes a global navigation satellite system receiver, and the global navigation satellite system receiver is configured to detect the carrier-to-noise ratio of the satellite signal.

With reference to the second aspect, in an optional implementation, the global navigation satellite system receiver is configured to detect whether satellite ephemeris is valid. If the satellite ephemeris is invalid, the global navigation satellite system receiver is configured to update the satellite ephemeris; or if the satellite ephemeris is valid, the controller is configured to control the amplifier based on the enable signal with the second duty cycle when the second duty cycle is less than the first duty cycle.

With reference to the second aspect, in an optional implementation, that the global navigation satellite system receiver is configured to update the satellite ephemeris includes: after the controller is configured to control the amplifier based on the enable signal with the 100% duty cycle, the global navigation satellite system receiver is configured to: receive satellite ephemeris from a satellite via an antenna, and update the satellite ephemeris based on the received satellite ephemeris.

With reference to the second aspect, in an optional implementation, that the global navigation satellite system receiver is configured to update the satellite ephemeris includes: the global navigation satellite system receiver is configured to detect whether the electronic device is within a mobile communication range; and if the electronic device is outside the mobile communication range, after the controller is configured to control the amplifier based on the enable signal with the 100% duty cycle, the global navigation satellite system receiver is configured to: receive satellite ephemeris from a satellite via an antenna, and update the satellite ephemeris based on the received satellite ephemeris.

With reference to the second aspect, in an optional implementation, after the global navigation satellite system receiver is configured to detect whether the electronic device is within the mobile communication range, the global navigation satellite system receiver is further configured to: if the electronic device is within the mobile communication range, receive satellite ephemeris from a mobile communication network via the antenna, and update the satellite ephemeris based on the received satellite ephemeris.

It should be noted that for beneficial effects of the second aspect and any optional implementation of the second aspect, refer to the beneficial effects of the first aspect and any optional implementation of the first aspect. Details are not described herein again.

According to a third aspect, an embodiment of this application provides a computer-readable storage medium, including computer instructions. When the computer instructions are run on an electronic device, the electronic device is enabled to perform the method according to the first aspect.

According to a fourth aspect, an embodiment of this application provides a chip or a chip system, including a processing circuit and an interface circuit. The interface circuit is configured to: receive code instructions, and transmit the code instructions to the processing circuit. The processing circuit is configured to run the code instructions to perform the method according to the first aspect.

According to a fifth aspect, an embodiment of this application provides a computer program product. The computer program product includes a computer program. When the computer program is run on a computer, the computer is enabled to perform the method according to the first aspect.

### BRIEF DESCRIPTION OF DRAWINGS

To describe the technical solutions in embodiments of this application more clearly, the following describes the accompanying drawings required for describing embodiments of this application.
FIG. 1 is a diagram of a structure of a GNSS system according to an embodiment of this application;
FIG. 2 is a diagram of an interface according to an embodiment of this application;
FIG. 3 is a diagram of a duty cycle according to an embodiment of this application;
FIG. 4 is a diagram of a structure of a test system according to an embodiment of this application;
FIG. 5 is a diagram of a curve of a first polynomial and each data point according to an embodiment of this application;
FIG. 6 is a diagram of a curve of a second polynomial and each data point according to an embodiment of this application;
FIG. 7 is a graph of a variation of an error caused by noise of a GNSS receiver as a carrier-to-noise ratio varies according to an embodiment of this application;
FIG. 8 is a diagram of a structure of a circuit system according to an embodiment of this application;
FIG. 9 is a diagram of a hardware structure of an electronic device according to an embodiment of this application;
FIG. 10 is a schematic flowchart of an enable signal control method according to an embodiment of this application;
FIG. 11 is a schematic flowchart of another enable signal control method according to an embodiment of this application;
FIG. 12 is a schematic flowchart of yet another enable signal control method according to an embodiment of this application;
FIG. 13 is a diagram of data points according to an embodiment of this application;
FIG. 14 is another diagram of data points according to an embodiment of this application;
FIG. 15 is a schematic flowchart of yet another enable signal control method according to an embodiment of this application; and
FIG. 16 is a schematic flowchart of yet another enable signal control method according to an embodiment of this application.

### DESCRIPTION OF EMBODIMENTS

The terms used in the following embodiments of this application are merely for the purpose of describing specific embodiments, but are not intended to limit this application. As used in the specification and the appended claims of this application, a singular expression form "one", "a", "said", "foregoing", "the", or "this" is intended to also include a plural expression form, unless clearly indicated to the contrary in the context. It should be further understood that the term "and/or" used in this application indicates that any or all possible combinations of one or more listed items are included. In embodiments of this application, terms "first" and "second" are used merely for the purpose of description, and shall not be construed as indicating or implying relative importance or implying a quantity of indicated technical features. Therefore, a feature limited by "first" or "second" may explicitly or implicitly include one or more such features. In the descriptions of embodiments of this application, unless otherwise specified, "a plurality of" means two or more than two.

For ease of understanding, the following describes some concepts in this application.

### 1. GNSS system

The GNSS system is a space-based radio navigation positioning system that can provide all-weather three-dimensional coordinates, speeds, and time information for a user at any place on the surface of the earth or in near-earth space. Optionally, the GNSS system generally includes a global positioning system (Global Positioning System, GPS), a globalnaja nawigazionnaja sputnikowaja sistema (GLONASS) system, a Galileo (GALILEO) system, a BeiDou navigation satellite system, and the like. The GPS system is a positioning system for radio navigation based on artificial earth satellites, and includes 24 satellites covering the entire globe. BeiDou navigation satellite systems are classified as two generations, that is, BeiDou-1 and BeiDou-2. The system usually includes four geosynchronous orbit satellites.

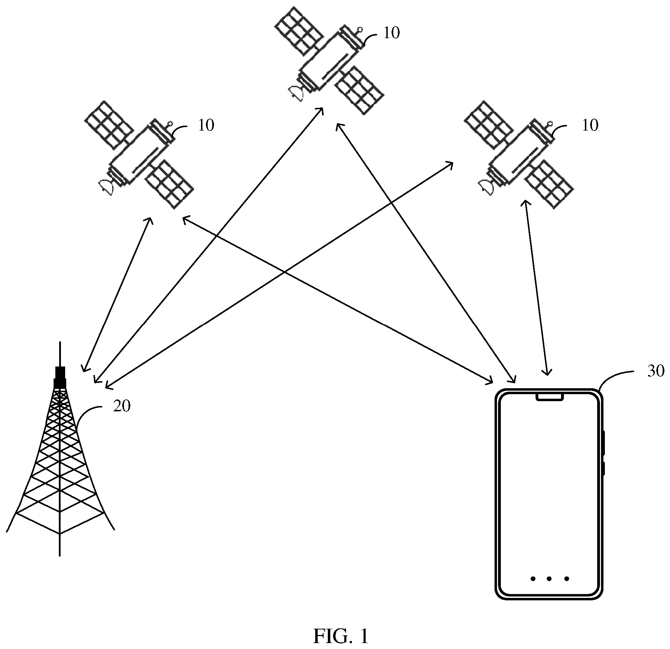

FIG. 1 is a diagram of a structure of the GNSS system. The GNSS system usually includes three major parts: a space part, a ground control part, and a user receiver. As shown in FIG. 1, the space part of the GNSS system may include a plurality of satellites 10, and the ground control part may include a ground control station 20. The ground control station 20 usually includes a main control station, a monitoring station, an injection station, and the like. The user receiver 30 of the GNSS system may receive satellite signals transmitted by the plurality of satellites 10.

A basic principle of the GNSS system is determining a location of the user receiver based on distances between the plurality of satellites whose locations are known and the user receiver. The location of the satellite may be obtained from satellite ephemeris based on a moment recorded by an on-board clock. The distance between the user receiver and the satellite may be determined based on a moment at which the satellite signal transmitted by the satellite is transmitted to the user receiver. The satellite signal may also be referred to as a GNSS signal.

In a positioning process, the ground control station 20 may transmit information such as satellite ephemeris to the plurality of satellites 10. The plurality of satellites 10 may continuously transmit satellite signals, where the satellite signals usually include the satellite ephemeris and transmission moments of the satellite signals. The user receiver 30 may search for and receive the satellite signals, determine locations of the satellites 10 by using the satellite ephemeris in the satellite signals, determine the distances between the user receiver 30 and the satellites 10 by using a clock of the user receiver and the transmission moments of the satellite signals, and further determine the location of the user receiver 30 based on the locations of the satellite 10 and the distances between the user receiver 30 and the satellites 10.

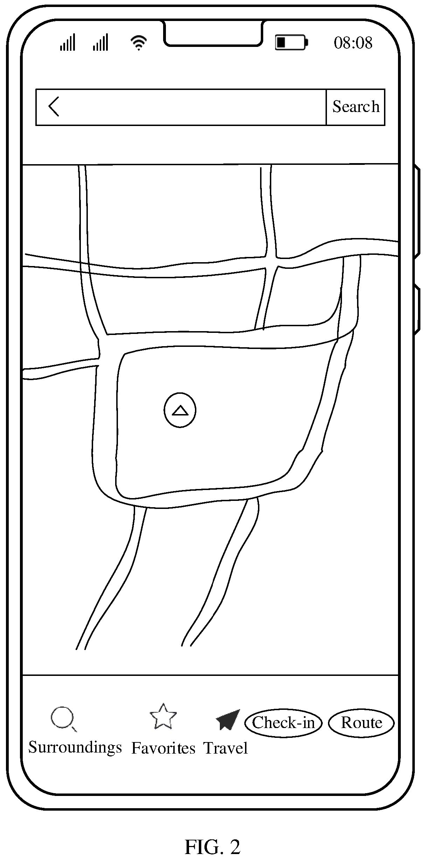

Optionally, the user receiver 30 may be deployed in an electronic device, so that the electronic device implements a positioning function. To be specific, the electronic device may determine a location of the electronic device based on a received satellite signal, and display the location of the electronic device on an electronic map. FIG. 2 is a diagram of an interface of the electronic device displaying the electronic map. As shown in FIG. 2, the location of the electronic device may be represented by a circle including a triangle. A user may know the location of the electronic device and a surrounding environment of the electronic device by watching the user interface displayed by the electronic device.

Optionally, the user receiver 30 in the electronic device may include an antenna, an amplifier, and a GNSS receiver. The antenna is configured to receive the satellite signal. The amplifier is configured to perform amplification processing on the satellite signal. The GNSS receiver is configured to implement the positioning function based on the satellite signal.

### 2. Amplifier

The amplifier is a preamplifier of a GNSS receiver. The amplifier may be configured to perform amplification processing on a satellite signal to obtain a processed satellite signal, and send the processed satellite signal to the GNSS receiver.

Optionally, the amplifier may include at least one of a low noise amplifier (Low Noise Amplifier, LNA) or a gain amplifier. The low noise amplifier is an amplifier with a very low noise factor, and is usually used as a preamplifier of various radio receivers and an amplification circuit of a high-sensitivity electronic detection device. In a scenario of amplifying a weak signal, the low noise amplifier can effectively reduce interference of noise of the amplifier on the signal, effectively improving a signal-to-noise ratio of the signal. The gain amplifier is configured to amplify a voltage, a current, or power of an input signal to a higher level, to enhance strength of the signal, so that the signal can be processed or transmitted more easily. For example, in radio communication, the gain amplifier may enhance strength of a signal, so that the signal can be transmitted to a longer distance, or can be more easily received in a noisy environment. In an audio amplifier, the gain amplifier may amplify a volume of an input signal to a higher level, so that the signal can be heard more easily. For ease of description, the following embodiments are described by using the low noise amplifier as an example. When the amplifier is the low noise amplifier, interference of noise of the amplifier on the satellite signal can be reduced, effectively improving a carrier-to-noise ratio of the satellite signal.

### 3. Enable signal

The enable signal is used to control an LNA. For example, the enable signal controls, at a high level, the LNA to operate, and controls, at a low level, the LNA to stop operating.

### 4. Duty cycle of an enable signal

The duty cycle of the enable signal is equal to a ratio of duration for which the enable signal is at a high level to an operating cycle of the enable signal. It should be noted that in embodiments of this application, the duty cycle of the enable signal may also be the duty cycle for short.

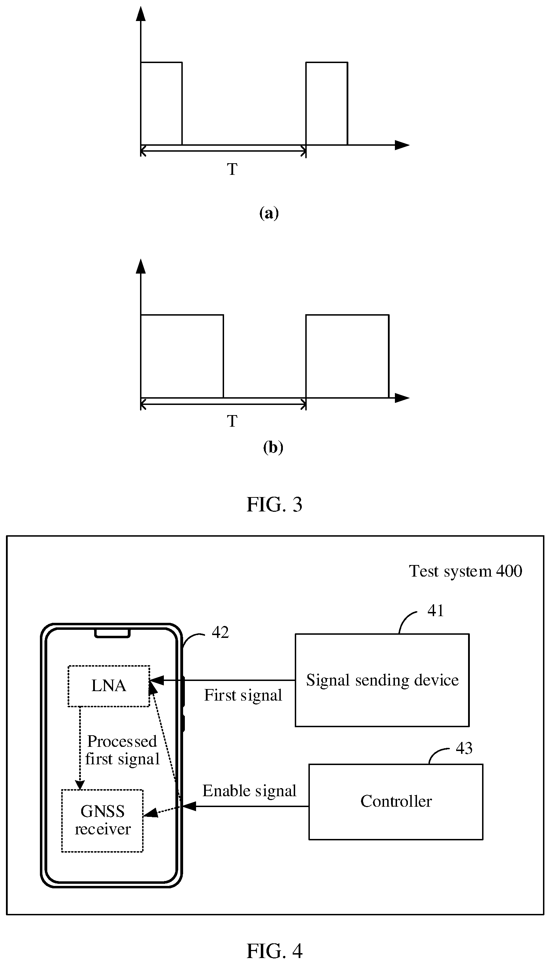

For example, the operating cycle of the enable signal is T. (a) in FIG. 3 is a diagram of an enable signal with a 25% duty cycle. (b) in FIG. 3 is a diagram of an enable signal with a 50% duty cycle.

Optionally, a value of the duty cycle of the enable signal may range from 10% to 100%. A lower duty cycle of the enable signal indicates shorter operating duration of an LNA in an operating cycle and lower power consumption of an electronic device (in other words, a higher duty cycle of the enable signal indicates longer operating duration of the LNA in the operating cycle and higher power consumption of the electronic device). For example, with reference to FIG. 3, when the LNA is controlled based on an enable signal with the 50% duty cycle, operating duration of the LNA in the operating cycle is half of the operating cycle; and when the LNA is controlled based on an enable signal with the 25% duty cycle, operating duration of the LNA in the operating cycle is one fourth of the operating cycle. The operating duration of the LNA controlled based on the enable signal with the 25% duty cycle is shorter than that of the LNA controlled based on the enable signal with the 50% duty cycle. When the duty cycle of the enable signal is adjusted from 50% to 25%, the power consumption of the electronic device is reduced.

### 5. Carrier-to-noise ratio

The carrier-to-noise ratio is a ratio of receive power of a satellite signal to noise power. Alternatively, the carrier-to-noise ratio is a ratio of receive power of a satellite signal received by a GNSS receiver to noise power.

Optionally, the carrier-to-noise ratio is related to a duty cycle of an enable signal.

For example, Table 1 shows carrier-to-noise ratios obtained through testing when the duty cycle of the enable signal is, for example, 100%, 80%, 60%, 40%, 20%, and 10%. When the duty cycle of the enable signal is 100%, the carrier-to-noise ratio is equal to 40.4 decibel-Hertz (dBHz). When the duty cycle of the enable signal is 80%, the carrier-to-noise ratio is equal to 38.9 dBHz. When the duty cycle of the enable signal is 60%, the carrier-to-noise ratio is equal to 37.4 dBHz. When the duty cycle of the enable signal is 40%, the carrier-to-noise ratio is equal to 35.5 dBHz. When the duty cycle of the enable signal is 20%, the carrier-to-noise ratio is equal to 31 dBHz. When the duty cycle of the enable signal is 10%, the carrier-to-noise ratio is equal to 25.5 dBHz.

**Table 1**

| Duty cycle of the enable signal | Carrier-to-noise ratio (dBHz) |
|---|---|
| 100% | 40.4 |
| 80% | 38.9 |
| 60% | 37.4 |
| 40% | 35.5 |
| 20% | 31 |
| 10% | 25.5 |

In an implementation, when an LNA is controlled by using enable signals with a same duty cycle. If a communication scenario changes (for example, power of a signal received by the GNSS receiver changes), a carrier-to-noise ratio obtained through testing may be different. Table 2 shows a carrier-to-noise ratio corresponding to power a of the signal received by the GNSS receiver and a carrier-to-noise ratio corresponding to power b of the signal received by the GNSS receiver, where a is different from b. An example in which the duty cycle of the enable signal is equal to 100%, 80%, 60%, 40%, 20%, or 10% is used. When the duty cycle of the enable signal is 100%, if the power of the signal received by the GNSS receiver is a, the corresponding carrier-to-noise ratio may be 40.4 dBHz, and if the power of the signal received by the GNSS receiver is b, the corresponding carrier-to-noise ratio may be 35.5 dBHz. When the duty cycle of the enable signal is 80%, if the power of the signal received by the GNSS receiver is a, the corresponding carrier-to-noise ratio may be 38.9 dBHz, and if the power of the signal received by the GNSS receiver is b, the corresponding carrier-to-noise ratio may be 34 dBHz. When the duty cycle of the enable signal is 60%, if the power of the signal received by the GNSS receiver is a, the corresponding carrier-to-noise ratio may be 37.4 dBHz, and if the power of the signal received by the GNSS receiver is b, the corresponding carrier-to-noise ratio may be 32.5 dBHz. When the duty cycle of the enable signal is 40%, if the power of the signal received by the GNSS receiver is a, the corresponding carrier-to-noise ratio may be 35.5 dBHz, and if the power of the signal received by the GNSS receiver is b, the corresponding carrier-to-noise ratio may be 30.6 dBHz. When the duty cycle of the enable signal is 20%, if the power of the signal received by the GNSS receiver is a, the corresponding carrier-to-noise ratio may be 31 dBHz, and if the power of the signal received by the GNSS receiver is b, the corresponding carrier-to-noise ratio may be 26 dBHz. When the duty cycle of the enable signal is 10%, if the power of the signal received by the GNSS receiver is a, the corresponding carrier-to-noise ratio may be 25.5 dBHz, and if the power of the signal received by the GNSS receiver is b, the corresponding carrier-to-noise ratio may be 21.5 dBHz.

**Table 2**

| Power of the signal received by the GNSS receiver | Duty cycle of the enable signal | Carrier-to-noise ratio (dBHz) | Carrier-to-noise ratio difference (dBHz) |
|---|---|---|---|
| a | 100% | 40.4 | 0 |
| | 80% | 38.9 | 1.5 |
| | 60% | 37.4 | 3 |
| | 40% | 35.5 | 4.9 |
| | 20% | 31 | 9.4 |
| | 10% | 25.5 | 14.9 |
| b | 100% | 35.5 | 0 |
| | 80% | 34 | 1.5 |
| | 60% | 32.5 | 3 |
| | 40% | 30.6 | 4.9 |
| | 20% | 26 | 9.5 |
| | 10% | 21.5 | 14 |

### 6. Carrier-to-noise ratio threshold

The carrier-to-noise ratio threshold is a carrier-to-noise ratio corresponding to a 100% duty cycle of an enable signal. The carrier-to-noise ratio threshold may be obtained through testing.

### 7. Carrier-to-noise ratio difference

The carrier-to-noise ratio difference is a difference between a carrier-to-noise ratio threshold and a carrier-to-noise ratio in a same scenario. For example, as shown in Table 2, when a duty cycle of an enable signal is 80%, a carrier-to-noise ratio threshold obtained through testing in a first communication scenario is 40.4 dBHz, a carrier-to-noise ratio is 38.9 dBHz, and a carrier-to-noise ratio difference is 40.4-38.9=1.5 dBHz; and a carrier-to-noise ratio threshold obtained through testing in a second communication scenario is 35.5 dBHz, a carrier-to-noise ratio is 34 dBHz, and a carrier-to-noise ratio difference is 35.5-34=1.5 dBHz. When the duty cycle of the enable signal is 60%, a carrier-to-noise ratio threshold obtained through testing in the first communication scenario is 40.4 dBHz, a carrier-to-noise ratio is 37.4 dBHz, and a carrier-to-noise ratio difference is 40.4-37.4=3 dBHz; and a carrier-to-noise ratio threshold obtained through testing in the second communication scenario is 35.5 dBHz, a carrier-to-noise ratio is 32.5 dBHz, and a carrier-to-noise ratio difference is 35.5-32.5=3 dBHz. When the duty cycle of the enable signal is 40%, a carrier-to-noise ratio threshold obtained through testing in the first communication scenario is 40.4 dBHz, a carrier-to-noise ratio is 35.5 dBHz, and a carrier-to-noise ratio difference is 40.4-35.5=4.9 dBHz; and a carrier-to-noise ratio threshold obtained through testing in the second communication scenario is 35.5 dBHz, a carrier-to-noise ratio is 30.6 dBHz, and a carrier-to-noise ratio difference is 35.5-30.6=4.9 dBHz. When the duty cycle of the enable signal is 20%, a carrier-to-noise ratio threshold obtained through testing in the first communication scenario is 40.4 dBHz, a carrier-to-noise ratio is 31 dBHz, and a carrier-to-noise ratio difference is 40.4-31=9.4 dBHz; and a carrier-to-noise ratio threshold obtained through testing in the second communication scenario is 35.5 dBHz, a carrier-to-noise ratio is 26 dBHz, and a carrier-to-noise ratio difference is 35.5-26=9.5 dBHz. When the duty cycle of the enable signal is 10%, a carrier-to-noise ratio threshold obtained through testing in the first communication scenario is 40.4 dBHz, a carrier-to-noise ratio is 25.5 dBHz, and a carrier-to-noise ratio difference is 40.4-25.5=14.9 dBHz; and a carrier-to-noise ratio threshold obtained through testing in the second communication scenario is 35.5 dBHz, a carrier-to-noise ratio is 21.5 dBHz, and a carrier-to-noise ratio difference is 35.5-21.5=14 dBHz.

It can be learned that for a same duty cycle, carrier-to-noise ratio differences obtained through testing in different communication scenarios are approximately the same.

It should be noted that the data in Table 1 and Table 2 may be obtained through testing in a scenario in which a frequency of the enable signal is 16.67 hertz (Hz). In another implementation, a test may be performed at another frequency, for example, the test may be performed at any frequency value in a range of 1 Hz to 20 Hz. This is not limited.

Optionally, Table 1 and Table 2 may be obtained by a test system through testing. For example, FIG. 4 shows an example diagram of a structure of the test system. As shown in FIG. 4, the test system 400 may include a signal sending device 41, an electronic device 42, and a controller 43. The signal sending device 41 is configured to send a first signal, where the first signal is used to simulate a satellite signal. The signal sending device 41 may be any device supporting signal sending, for example, a GPS meter. The electronic device 42 is configured to receive the first signal from the signal sending device 41, determine a carrier-to-noise ratio based on the first signal, and output the carrier-to-noise ratio. Optionally, the electronic device 42 may include an LNA and a GNSS receiver. The LNA is configured to perform amplification processing on the first signal to obtain a processed first signal. The GNSS receiver is configured to determine the carrier-to-noise ratio based on the processed first signal. The controller 43 is configured to output enable signals with different duty cycles, where the enable signal is used to control the electronic device 42 (for example, the enable signal may be used to control the LNA in the electronic device 42, or for another example, the enable signal may be used to control the LNA and the GNSS receiver in the electronic device 42). It should be noted that in some implementations, the controller 43 may include a radio frequency switch module and a signal transmitter. The radio frequency switch module is configured to enable the enable signal or disable the enable signal. The signal transmitter is configured to adjust the duty cycle of the enable signal.

It should be noted that the data in Table 1 and Table 2 is obtained through testing in a same test system. When the test system changes, data may change. For example, when an internal software and hardware structure of the GNSS receiver is changed, for a same duty cycle, carrier-to-noise ratio differences obtained by different test systems through testing may be different.

For a same duty cycle, carrier-to-noise ratio differences obtained through testing in different scenarios are the same. It can be learned that the duty cycle of the enable signal is in one-to-one correspondence with the carrier-to-noise ratio difference. Therefore, if the duty cycle of the enable signal is known, the corresponding carrier-to-noise ratio difference may be determined. Similarly, if the carrier-to-noise ratio difference is known, the corresponding duty cycle of the enable signal may also be determined. For example, when the amplifier is controlled by using an enable signal with a first duty cycle, a carrier-to-noise ratio difference of the satellite signal obtained through processing of the amplifier is a first carrier-to-noise ratio difference corresponding to the first duty cycle. For another example, when the amplifier is controlled by using an enable signal with a second duty cycle, a carrier-to-noise ratio difference of the satellite signal obtained through processing of the amplifier is a second carrier-to-noise ratio difference corresponding to the second duty cycle.

Embodiments of this application provide two manners to construct the correspondence between the duty cycle of the enable signal and the carrier-to-noise ratio difference.

### (1) Polynomial fitting

Polynomial fitting means fitting a polynomial curve by using coordinate values (that is, the duty cycles of the enable signal and the corresponding carrier-to-noise ratio differences in Table 2) of known data points, so that the polynomial curve coincide with the given data points as much as possible.

### A. First polynomial

The first polynomial is used to describe a rule that the carrier-to-noise ratio difference varies with the duty cycle of the enable signal. In other words, when the duty cycle of the enable signal is known, the carrier-to-noise ratio difference corresponding to the duty cycle may be determined by using the first polynomial.

For example, the first polynomial may be: $y = - 46.67 {x}^{3} + 97.85 {x}^{2} - 72.16 x + 20.87$

x represents the duty cycle of the enable signal, and y represents the carrier-to-noise ratio difference.

Optionally, the first polynomial may be obtained through simulation by using MATLAB software.

Optionally, code input to the MATLAB software may include but is not limited to the following: $x = \left[1 0.8 0.6 0.4 0.2 0.1\right] ;$ $y = \left[0 1.5 3 4.9 9.4 14.9\right] ;$ $P = polyfit \left(x, y, 3\right) ;$ $xi = 0 : 0.01 : 1 ;$ $yi = polyval \left(P, xi\right) ;$

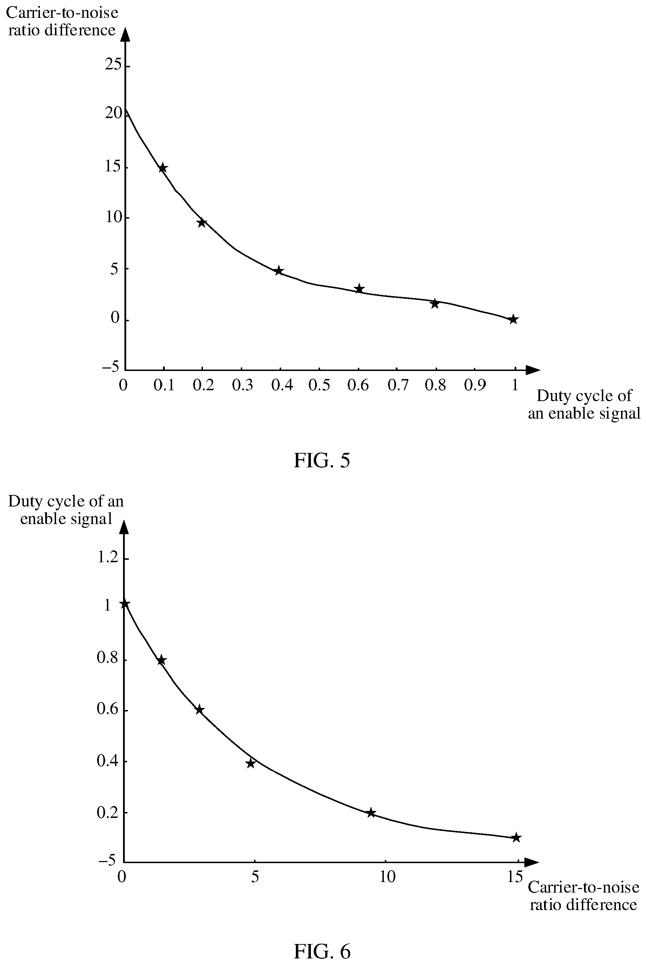

For example, to more directly present a coincidence relationship between a curve of the first polynomial obtained through simulation and the given data points, code plot(xi, yi, x, y, 'b★') may be input to the MATLAB software, to display the curve of the first polynomial and the given data points. FIG. 5 is a diagram of the curve of the first polynomial and the data points. As shown in FIG. 5, a solid line represents the curve of the first polynomial, and black ★ represents each data point. It can be learned from FIG. 5 that the curve of the first polynomial basically coincides with the given data points.

### B. Second polynomial

The second polynomial is used to describe a rule that the duty cycle of the enable signal varies with the carrier-to-noise ratio difference. In other words, when the carrier-to-noise ratio difference is known, the duty cycle corresponding to the carrier-to-noise ratio difference may be determined by using the second polynomial.

For example, the second polynomial may be: $y = - 0.0003 {x}^{3} + 0.0115 {x}^{2} - 0.1706 x + 1.0113$

x represents the carrier-to-noise ratio difference, and y represents the duty cycle of the enable signal.

Optionally, the second polynomial may be obtained through simulation by using MATLAB software.

Optionally, code input to the MATLAB software may include but is not limited to the following: $x = \left[0 1.5 3 4.9 9.4 14.9\right] ;$ $y = \left[1 0.8 0.6 0.4 0.2 0.1\right] ;$ $P = polyfit \left(x, y, 3\right) ;$ $xi = 0 : 0.1 : 15 ;$ $yi = polyval \left(P, xi\right) ;$

For example, to more directly present a coincidence relationship between a curve of the second polynomial obtained through simulation and the given data points, code plot(xi, yi, x, y, 'b★') may be input to the MATLAB software, to display the curve of the second polynomial and the given data points. FIG. 6 is a diagram of the curve of the second polynomial and the data points. As shown in FIG. 6, a solid line represents the curve of the second polynomial, and black ★ represents the data point. It can be learned from FIG. 6 that the curve of the second polynomial basically coincides with the given data points.

It should be noted that the first polynomial and the second polynomial obtained through polynomial fitting are merely example descriptions. In another implementation, the first polynomial and the second polynomial may alternatively be higher-order polynomials. This is are not limited.

### (2) Interpolation method

The interpolation method is a method of constructing a straight line based on two known points, to determine an unknown point.

For example, it is assumed that two points A and B are known, and coordinates of the two points A and B are A (xₐ, yₐ) and B (x_{b}, y_{b}). When it is known that the duty cycle of the enable signal is x₀, the corresponding carrier-to-noise ratio difference may be obtained by using the following expression: ${y}_{0} = \frac{{x}_{0} - {x}_{a}}{{x}_{b} - {x}_{a}} \times \left({y}_{b}-{y}_{a}\right) + {y}_{a}$

x₀, xₐ, and x_{b} represent duty cycles of the enable signal, and y₀, yₐ, and y_{b} represent corresponding carrier-to-noise ratio differences.

For another example, it is assumed that two points M, N are known, and coordinates of the two points M and N are M (xₘ, yₘ) and N (xₙ, yₙ). When it is known that the carrier-to-noise ratio difference is y₀, the corresponding duty cycle of the enable signal may be obtained by using the following expression: ${y}_{0} = \frac{{y}_{0} - {y}_{m}}{{y}_{n} - {y}_{m}} \times \left({x}_{n}-{x}_{m}\right) + {x}_{m}$

y₀, yₘ, and yₙ represent carrier-to-noise ratio differences, and x₀, xₘ, and xₚ represent corresponding duty cycles of the enable signal.

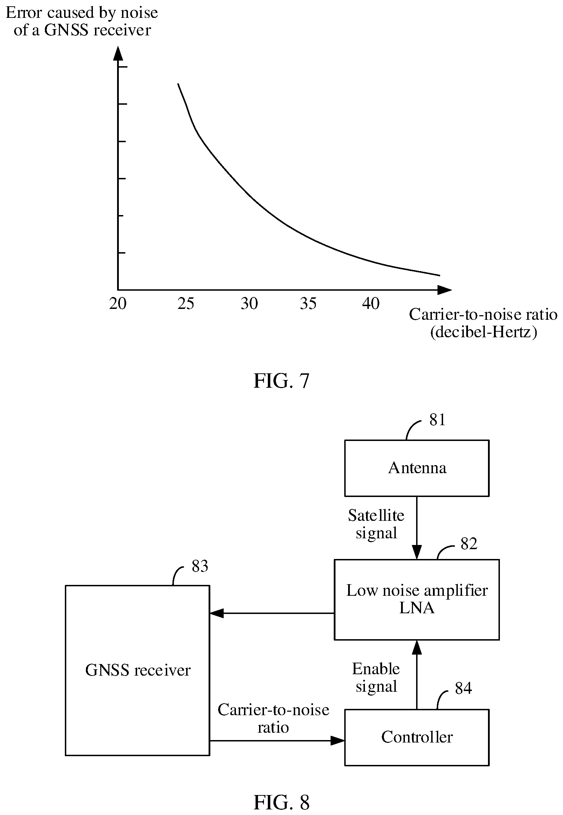

Currently, GNSS positioning performance is related to a carrier-to-noise ratio. For example, FIG. 7 is a graph of a variation of an error caused by noise of a GNSS receiver as the carrier-to-noise ratio varies according to an embodiment of this application. As shown in FIG. 7, as the carrier-to-noise ratio increases, a positioning error caused by the noise of the GNSS receiver gradually decreases. When a positioning error caused by another error source such as multipath remains unchanged, an increase in the carrier-to-noise ratio results in a diminishing margin for an improvement in GNSS positioning precision (or referred to as GNSS performance benefits). In other words, as the carrier-to-noise ratio increases, the improvement in the GNSS positioning precision gradually diminishes. It should be noted that multipath is a propagation phenomenon that a satellite signal arrives at an electronic device from a satellite through a plurality of paths.

In addition, when a duty cycle of an enable signal is high, operating duration of an LNA in an operating cycle is long, and power consumption of the electronic device is high. Therefore, how to reduce the power consumption without affecting GNSS performance benefits is a problem that needs to be resolved urgently.

Based on this, an embodiment of this application provides an enable signal control method. When it is detected that a current carrier-to-noise ratio of a satellite signal is outside a preset range, a second duty cycle is determined, where when an enable signal with the second duty cycle is used to control the LNA, a carrier-to-noise ratio of the satellite signal is within the preset range. In addition, when the second duty cycle is less than a first duty cycle, the duty cycle of the enable signal is adjusted to the second duty cycle, and the LNA is controlled based on the enable signal with the second duty cycle. The operating duration of the LNA in the operating cycle can be reduced without affecting performance benefits of the GNSS receiver, helping reduce the power consumption of the electronic device without affecting the performance benefits of the GNSS receiver.

The enable signal control method according to this embodiment of this application may be applied to a circuit system shown in FIG. 8. FIG. 8 is a diagram of a structure of the circuit system. As shown in FIG. 8, the circuit system may include an antenna 81, an LNA 82, a GNSS receiver 83, and a controller 84. The antenna 81 is connected to the LNA 82. The LNA 82 is connected to the antenna 81, the GNSS receiver 83, and the controller 84. The GNSS receiver 83 is connected to the LNA 82 and the controller 84.

In some optional implementations, the circuit system may be specifically configured to implement the following steps.
s11: The antenna 81 receives a satellite signal, and sends the satellite signal to the LNA 82.
s12: The LNA 82 receives the satellite signal from the antenna 81.
s13: The controller 84 sends an enable signal with a first duty cycle to the LNA 82.
s14: The LNA 82 receives the enable signal with the first duty cycle from the controller 84, performs amplification processing on the satellite signal under control of the enable signal with the first duty cycle, to obtain a processed satellite signal, and sends the processed satellite signal to the GNSS receiver 83.
s15: The GNSS receiver 83 receives the processed satellite signal from the LNA 82, detects a current carrier-to-noise ratio of the satellite signal based on the processed satellite signal, and sends the current carrier-to-noise ratio of the satellite signal to the controller 84.
s16: The controller 84 receives the current carrier-to-noise ratio of the satellite signal from the GNSS receiver 83, and determines a second duty cycle when detecting that the current carrier-to-noise ratio of the satellite signal is outside a preset range.
s17: If the second duty cycle is less than the first duty cycle, the controller 84 sends an enable signal with the second duty cycle to the LNA 82.
s18: The LNA 82 receives the enable signal with the second duty cycle from the controller 84, performs amplification processing on the satellite signal under control of the enable signal with the second duty cycle, to obtain a processed satellite signal, and sends the processed satellite signal to the GNSS receiver 83.
s19: The GNSS receiver 83 receives the processed satellite signal from the LNA 82, detects, based on the processed satellite signal, that a carrier-to-noise ratio of the satellite signal is within the preset range, and sends the carrier-to-noise ratio of the satellite signal within the preset range to the controller 84.
s20: The controller 84 receives the carrier-to-noise ratio of the satellite signal within the preset range from the GNSS receiver 83.

Optionally, the controller 84 may be a microcontroller unit (Microcontroller Unit, MCU). Optionally, the controller 84 may be an independent component, or may be integrated into the GNSS receiver 83 or the LNA 82. This is not limited.

Optionally, in some other embodiments, the circuit system may further support the controller 84 in sending information to the GNSS receiver. For example, the information includes at least one of the following: an update cycle, a start moment, and an end moment. The update cycle is a time interval between two adjacent courses of carrier-to-noise ratio sending. The start moment is a moment at which the GNSS receiver 83 starts to send the carrier-to-noise ratio to the controller 84. The end moment is a moment at which the GNSS receiver 83 stops sending the carrier-to-noise ratio to the controller 84.

It should be noted that the steps implemented by the circuit system are not specifically limited in this embodiment of this application. The circuit system may change an implementation sequence of the steps, or may be configured to implement more or fewer steps than those shown in the example.

It should be understood that the circuit system shown in this embodiment of this application does not constitute a specific limitation on the circuit system. In some other embodiments, the circuit system may include more or fewer components than those shown in the figure, some components may be combined, some components may be split, or a different component arrangement may be used. The components shown in the figure may be implemented by using hardware, software, or a combination of software and hardware.

In some optional implementations, the circuit system may be deployed in an electronic device. The electronic device includes but is not limited to a mobile phone, a tablet computer, a vehicle-mounted device, a personal digital assistant (personal digital assistant, PDA), an augmented reality (augmented reality, AR)/virtual reality (virtual reality, VR) device, a wearable device (for example, a laptop computer and a smartwatch), and the like.

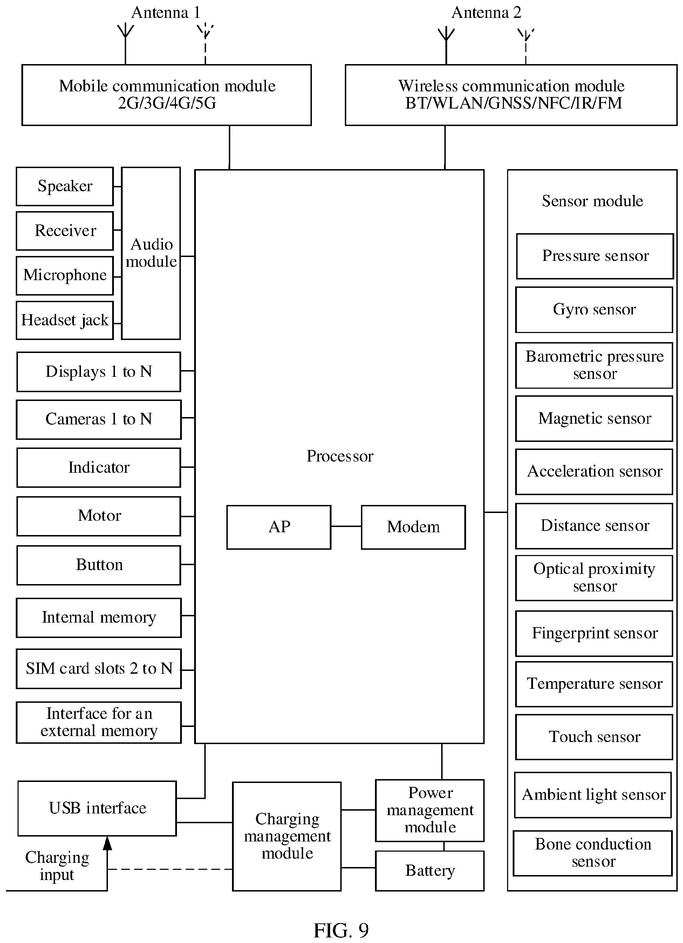

FIG. 9 is a diagram of a hardware structure of an electronic device. The electronic device may include a processor, an interface for an external memory, an internal memory, a universal serial bus (Universal Serial Bus, USB) interface, a charging management module, a power management module, a battery, an antenna 1, an antenna 2, a mobile communication module, a wireless communication module, a sensor module, a button, a motor, an indicator, a camera, a display, a SIM card slot, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of this application does not constitute a specific limitation on the electronic device. In some other embodiments, the electronic device may include more or fewer components than those shown in the figure, some components may be combined, some components may be split, or a different component arrangement may be used. The components shown in the figure may be implemented by using hardware, software, or a combination of software and hardware.

The processor may include one or more processing units. For example, the processor may include an application processor (Application Processor, AP), a modem (Modem) processor, a central processing unit (Central Processing Unit, CPU), a graphics processing unit (Graphics Processing Unit, GPU), an image signal processor (Image Signal Processor, ISP), a controller, a memory, a video codec, a digital signal processor (digital signal processor, DSP), and a neural-network processing unit (neural-network processing unit, NPU). Different processing units may be independent components, or may be integrated into one or more processors.

A wireless communication function of the electronic device may be implemented by using the antenna 1, the antenna 2, the mobile communication module, the wireless communication module, the modem, and the like. In some embodiments, in the electronic device, the antenna 1 and the mobile communication module are coupled, and the antenna 2 and the wireless communication module are coupled, so that the electronic device can communicate with a network side device and another electronic device by using a wireless communication technology. In this embodiment of this application, the electronic device may receive a satellite signal via the antenna 2.

The touch sensor is also referred to as a "touch component". The touch sensor may be disposed on the display. The touch sensor and the display constitute a touchscreen, also referred to as a "touch control screen". The touch sensor is configured to detect a touch operation performed on or near the touch sensor. The touch sensor may transfer the detected touch operation to the AP, to determine a touch event type. A visual output related to the touch operation may be provided on the display. In some other embodiments, the touch sensor may alternatively be disposed on a surface of the electronic device, and is located at a position different from that of the display. In this embodiment of this application, that the electronic device detects whether there is a user operation acting on the display of the electronic device may be completed by the touch sensor. For example, after the touch sensor detects the touch operation, the electronic device may enable a positioning function.

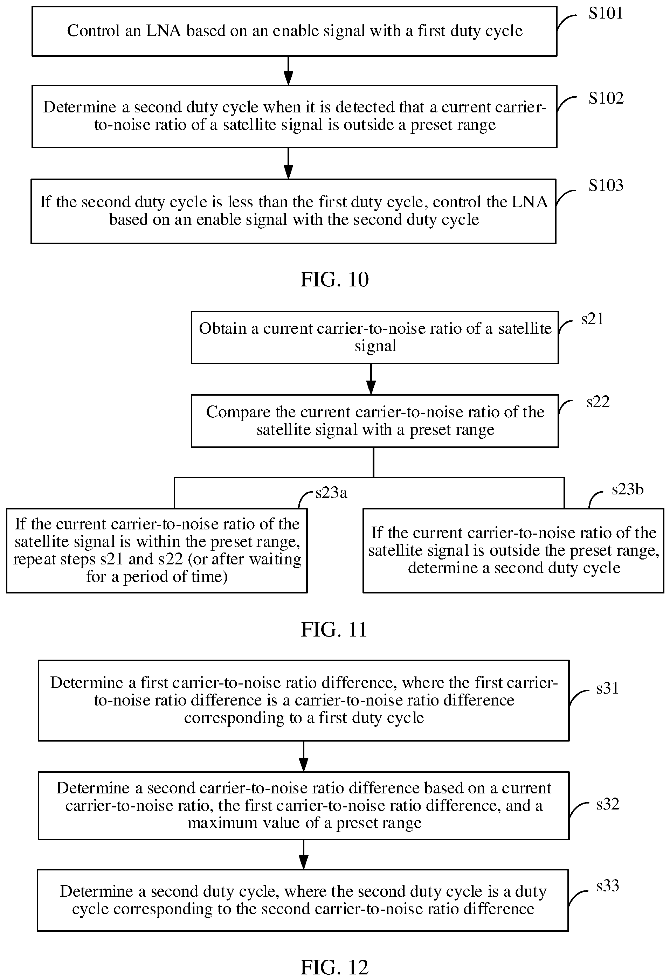

FIG. 10 is a schematic flowchart of an enable signal control method according to an embodiment of this application. As shown in FIG. 10, the enable signal control method may include but is not limited to the following steps.

**S101: Control an LNA based on an enable signal with a first duty cycle.**

The first duty cycle is a current duty cycle of the enable signal. For example, if the duty cycle of the enable signal has not been adjusted, the first duty cycle is an initial value in a first adjustment step. If the duty cycle of the enable signal has been adjusted, the first duty cycle is a duty cycle obtained through last adjustment.

In some embodiments, before step S101, the method further includes S100: receiving a satellite signal. Specifically, an electronic device may receive the satellite signal via an antenna 2. It should be noted that for detailed descriptions of the satellite signal, refer to related descriptions of the GNSS system, and details are not described herein again.

Optionally, the electronic device receives the satellite signal when a first trigger condition is satisfied. The first trigger condition may include at least one of the following: a positioning function of the electronic device is in an enabled state, or the electronic device detects a location search operation.
(1) For a scenario in which the first trigger condition is that the positioning function of the electronic device is in the enabled state

If a user needs to use the positioning function of the electronic device, the electronic device may detect an enable operation on the positioning function. In response to the enable operation, the electronic device enables the positioning function, and the positioning function enters the enabled state. In this case, the electronic device may receive the satellite signal. The enable operation on the positioning function may include a plurality of forms. For example, a control corresponding to the positioning function may be included in a status bar of the electronic device. In this case, the enable operation on the positioning function is a touch operation on the control. Certainly, the enable operation on the positioning function may further include another form. This is not limited in embodiments of this application.

### (2) For a scenario in which the first trigger condition is that the electronic device detects the location search operation

If the user needs to obtain a current location, the electronic device may detect the location search operation. In response to the location search operation, the electronic device needs to use the positioning function. In this case, the electronic device may receive the satellite signal. The location search operation may include a plurality of forms. For example, a control corresponding to a location search may be included in a display interface of the electronic device. In this case, the location search operation may include a touch operation on the control. In addition, if the electronic device supports a voice input function, the location search operation may include outputting a voice indicating the location search to the electronic device. Certainly, the location search operation may further include another form. This is not limited in embodiments of this application.

According to the foregoing solution, in this embodiment of this application, the electronic device receives the satellite signal to perform the positioning function only when satisfying the first trigger condition. This can effectively reduce duration for which the electronic device performs the positioning function, effectively reducing power consumption of the electronic device.

**S102: Determine a second duty cycle when it is detected that a current carrier-to-noise ratio of the satellite signal is outside a preset range.**

In an optional implementation, as shown in FIG. 11, S102 may include but is not limited to s21 to s23 (including s23a and s23b).

s21: Obtain the current carrier-to-noise ratio of the satellite signal.

Optionally, the current carrier-to-noise ratio may be a currently detected carrier-to-noise ratio. In this implementation, only one carrier-to-noise ratio is considered, which is simpler and more convenient.

Optionally, the current carrier-to-noise ratio may be a minimum carrier-to-noise ratio or a carrier-to-noise ratio average of a plurality of carrier-to-noise ratios. The plurality of carrier-to-noise ratios are a part or all of currently detected carrier-to-noise ratios. For example, carrier-to-noise ratios of five satellite signals are currently detected. In this case, the carrier-to-noise ratios of the five satellite signals may be directly used as the plurality of carrier-to-noise ratios, and a minimum carrier-to-noise ratio or a carrier-to-noise ratio average of the carrier-to-noise ratios of the five satellite signals is selected as the current carrier-to-noise ratio. For another example, carrier-to-noise ratios of 12 satellite signals are currently detected. In this case, carrier-to-noise ratios of five satellite signals in the carrier-to-noise ratios of the 12 satellite signals may be used as the plurality of carrier-to-noise ratios, and a minimum carrier-to-noise ratio or a carrier-to-noise ratio average of the carrier-to-noise ratios of the five satellite signals is selected as the current carrier-to-noise ratio. The carrier-to-noise ratio of each satellite signal is determined based on receive power of the satellite signal and corresponding noise power. In this implementation, the plurality of carrier-to-noise ratios are comprehensively considered, to avoid impact of an error of single data, so that accuracy of the carrier-to-noise ratio can be effectively improved.

s22: Compare the current carrier-to-noise ratio of the satellite signal with the preset range.

The preset range is a carrier-to-noise ratio interval, and may be represented as [CN0_{min,} CN0ₘₐₓ], where CN0ₘₐₓ is a maximum value of the preset range, and CN0ₘᵢₙ is a minimum value of the preset range. For example, the preset range is set to [25 dBHz, 35 dBHz], where 35 dBHz is the maximum value of the preset range, and 25 dBHz is the minimum value of the preset range. It should be noted that in another implementation, the preset range may alternatively be a preset carrier-to-noise ratio, and details are not described in this application.

If the current carrier-to-noise ratio is within the preset range, performance benefits of a GNSS receiver are good. If the current carrier-to-noise ratio is greater than the maximum value of the preset range, an increase in the carrier-to-noise ratio results in a diminishing margin for an improvement in GNSS positioning precision, and when the current carrier-to-noise ratio decreases to be within the preset range, impact on the performance benefits of the GNSS receiver is small. If the current carrier-to-noise ratio is less than the minimum value of the preset range, when the current carrier-to-noise ratio increases to be within the preset range, the performance benefits of the GNSS receiver can be effectively improved.

Optionally, the preset range may be determined based on the preset carrier-to-noise ratio. For example, the preset range is a carrier-to-noise ratio interval including the preset carrier-to-noise ratio. Specifically, when the carrier-to-noise ratio is greater than the preset carrier-to-noise ratio, an increase in the carrier-to-noise ratio results in a diminishing margin for an improvement in GNSS positioning precision, and when the current carrier-to-noise ratio decreases to the preset carrier-to-noise ratio, impact on the performance benefits of the GNSS receiver is small. When the current carrier-to-noise ratio increases to the preset carrier-to-noise ratio, the performance benefits of the GNSS receiver can be effectively improved. Therefore, if the current carrier-to-noise ratio is adjusted to the preset carrier-to-noise ratio, the power consumption can be reduced without affecting the performance benefits of the GNSS receiver. Further, to avoid frequency adjustment of the carrier-to-noise ratio, the preset range may be set based on the preset carrier-to-noise ratio. When the current carrier-to-noise ratio is within the preset range, the power consumption can be reduced while the performance benefits of the GNSS receiver are improved. When the current carrier-to-noise ratio is greater than the maximum value of the preset range, the increase in the carrier-to-noise ratio results in the diminishing margin for the improvement in GNSS positioning precision, and when the current carrier-to-noise ratio decreases to be within the preset range, the impact on the performance benefits of the GNSS receiver is small. If the current carrier-to-noise ratio is less than the minimum value of the preset range, when the current carrier-to-noise ratio increases to be within the preset range, the performance benefits of the GNSS receiver can be effectively improved.

Optionally, in another implementation, the preset range may be set by default, may be set by the user, or may be obtained through analysis based on preset time sequence data. The preset time sequence data includes a carrier-to-noise ratio and corresponding positioning precision of the GNSS receiver at each moment of a preset time period. The preset time period may be any historical time period. For example, the preset time period is one hour in the past (for example, a current moment is 10:00, and the one hour in the past may be 9:00 to 10:00), or 30 minutes closest to the current moment (for example, the current moment is 10:00, and the 30 minutes closest to the current moment may be 9:30 to 10:00).

s23a: If the current carrier-to-noise ratio of the satellite signal is within the preset range, repeat steps s21 and s22 (or after waiting for a period of time).

s23b: If the current carrier-to-noise ratio of the satellite signal is outside the preset range, determine the second duty cycle.

It should be noted that step s23a and step s23b are two parallel steps. If step s23a is performed, step s23b is not performed; or if step s23b is performed, step s23a is not performed.

It should be noted that, that the current carrier-to-noise ratio of the satellite signal is outside the preset range includes: The current carrier-to-noise ratio of the satellite signal is greater than the maximum value of the preset range, or the current carrier-to-noise ratio of the satellite signal is less than the minimum value of the preset range. The following provides descriptions for the two cases.
**(1) The current carrier-to-noise ratio of the satellite signal is greater than the maximum value of the preset range.**

Determining the second duty cycle includes: obtaining the second duty cycle based on the current carrier-to-noise ratio (which may be represented as CN0), the first duty cycle (which may be represented as x₁), and the maximum value (which may be represented as CN0ₘₐₓ) of the preset range. As shown in FIG. 12, this may include but is not limited to step s31 to step s33.

s31: Determine a first noise-to-noise ratio difference, where the first noise-to-noise ratio difference is a noise-to-noise ratio difference corresponding to the first duty cycle.

In an optional implementation, a first polynomial may be obtained through fitting based on test data, and the first duty cycle (x₁) is input to the first polynomial to obtain the first carrier-to-noise ratio difference (y₁). For example, the first polynomial may be a formula 1, and the first carrier-to-noise ratio difference (y1) may be obtained by inputting the first duty cycle (x1) into the formula (1). It should be noted that for related descriptions of the first polynomial, refer to the foregoing embodiment, and details are not described again. In this implementation, because the first polynomial is obtained based on polynomial fitting, a rule that the carrier-to-noise ratio difference represented by the first polynomial varies with the duty cycle of the enable signal is more accurate, and the first carrier-to-noise ratio difference determined based on the first polynomial is also more accurate.

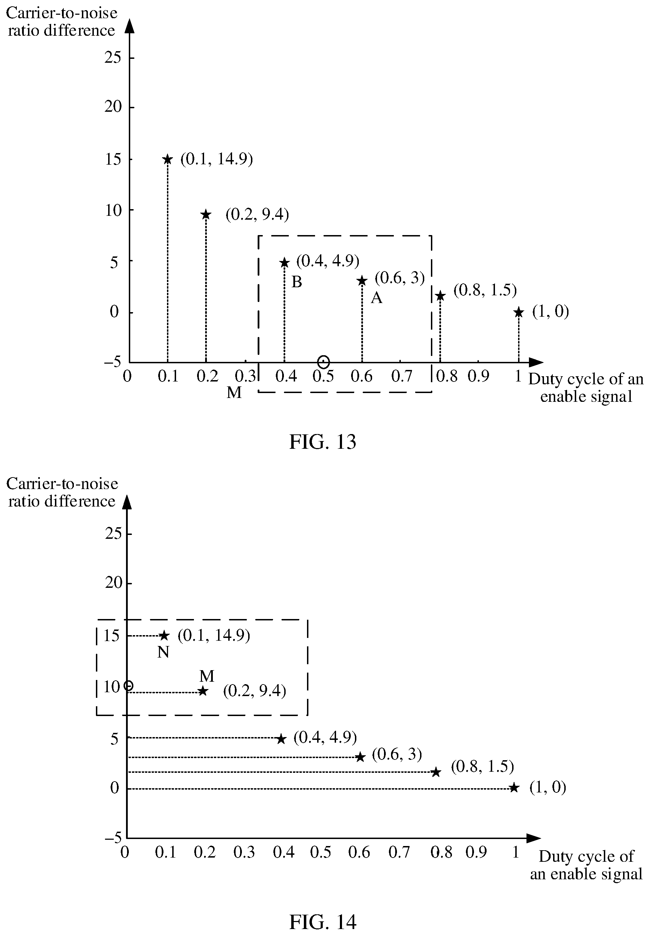

In another optional implementation, six data points may be first determined based on test data. For example, it can be learned from the test data that when the duty cycle of the enable signal is 1, the corresponding carrier-to-noise ratio difference is 0, and a point (1, 0) may be determined; when the duty cycle of the enable signal is 0.8, the corresponding carrier-to-noise ratio difference is 1.5, and a point (0.8, 1.5) may be determined; when the duty cycle of the enable signal is 0.6, the corresponding carrier-to-noise ratio difference is 3, and a point (0.6, 3) may be determined; when the duty cycle of the enable signal is 0.4, the corresponding carrier-to-noise ratio difference is 4.9, and a point (0.4, 4.9) may be determined; when the duty cycle of the enable signal is 0.2, the corresponding carrier-to-noise ratio difference is 9.4, and a point (0.2, 9.4) may be determined; and when the duty cycle of the enable signal is 0.1, the corresponding carrier-to-noise ratio difference is 14.9, and a point (0.1, 14.9) may be determined. As shown in FIG. 13, black ★ represents each data point. FIG. 13 is a diagram of the data points. Then, two points A and B with minimum differences between the duty cycle and the first duty cycle are selected from the six points. For example, if the first duty cycle is 0.5, coordinates of the two selected points are A (0.6, 3) and B (0.4, 4.9). Then, the first duty cycle (x₁), the coordinates of the point A, and the coordinates of the point B are input to a formula (3) to obtain the first carrier-to-noise ratio difference (y₁). It should be noted that for related descriptions of the formula (3), refer to the foregoing embodiment, and details are not described again. In this implementation, compared with the formula (1), a calculation amount of the formula (3) is smaller, so that calculation resources can be effectively saved.

s32: Determine a second carrier-to-noise ratio difference based on the current carrier-to-noise ratio, the first carrier-to-noise ratio difference, and the maximum value of the preset range.

In an optional implementation, a carrier-to-noise ratio threshold is first determined based on the current carrier-to-noise ratio and the first carrier-to-noise ratio difference. Then, a first difference may be determined based on the maximum value of the preset range and the current carrier-to-noise ratio. Finally, the second carrier-to-noise ratio difference is determined based on the carrier-to-noise ratio threshold and the first difference. The first difference is a difference between the maximum value of the preset range and the current carrier-to-noise ratio.

Optionally, the second carrier-to-noise ratio difference may be specifically determined by using the following formula: ${y}_{2} = CN 0 + {y}_{1} - \left({CN 0}_{max}-CN0\right)$

y₂ represents the second carrier-to-noise ratio difference. CN0 represents the current carrier-to-noise ratio. y₁ represents the first carrier-to-noise ratio difference. CN0ₘₐₓ represents the maximum value of the preset range.

s33: Determine the second duty cycle, where the second duty cycle is a duty cycle corresponding to the second carrier-to-noise ratio difference.

In an optional implementation, a second polynomial may be obtained through fitting based on the test data, and the second carrier-to-noise ratio difference (y₂) is input to the second polynomial to obtain the second duty cycle (x₂) of the enable signal. For example, the second polynomial may be a formula 2, and the second duty cycle (x₂) of the enable signal may be obtained by inputting the second carrier-to-noise ratio difference (y₂) to the second polynomial. It should be noted that for related descriptions of the second polynomial, refer to the foregoing embodiment, and details are not described again. In this implementation, because the second polynomial is obtained based on polynomial fitting, a rule that the duty cycle of the enable signal represented by the second polynomial varies with the carrier-to-noise ratio difference is more accurate, and the second duty cycle determined based on the second polynomial is also more accurate.

In another optional implementation, six points (for example, coordinates of the six points are (1, 0), (0.8, 1.5), (0.6, 3), (0.4, 4.9), (0.2, 9.4), and (0.1, 14.9)) may be determined based on test data. As shown in FIG. 14, black ★ represents each data point. FIG. 14 is a diagram of the data points. Then, two points M and N with minimum differences between the carrier-to-noise ratio difference and the second carrier-to-noise ratio difference are selected from the six points. For example, if the second carrier-to-noise ratio difference is 10, coordinates of the two points are M (0.2, 9.4) and N (0.1, 14.9). Then, the second carrier-to-noise ratio difference (y₂), the coordinates of the point M, and the coordinates of the point N are input to a formula (4) to obtain the second duty cycle (x₂) of the enable signal. It should be noted that for related descriptions of the formula (4), refer to the foregoing embodiment, and details are not described again. In this implementation, compared with the formula (2), a calculation amount of the formula (4) is smaller, so that calculation resources can be effectively saved. It should be noted that for descriptions of the six points, refer to s31, and details are not described herein again.

In this embodiment, a correspondence between the duty cycle of the enable signal and the carrier-to-noise ratio difference is obtained through analysis based on historical data, and the second duty cycle may be accurately determined based on the historical data. In addition, the maximum value of the preset range is considered when the second duty cycle is obtained, so that the second duty cycle may be less than the first duty cycle, and when the enable signal with the second duty cycle is used to control the LNA, the carrier-to-noise ratio of the satellite signal is within the preset range. Therefore, the power consumption of the electronic device can be reduced without affecting the performance benefits of the GNSS receiver.

**(2) The current carrier-to-noise ratio of the satellite signal is less than the minimum value of the preset range.**

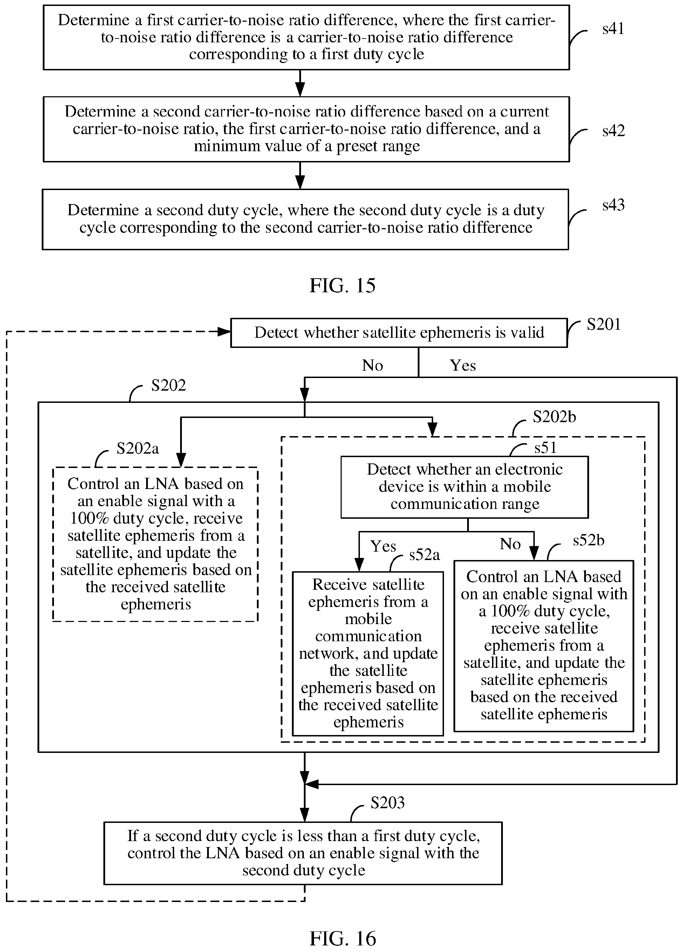

Determining the second duty cycle includes: obtaining the second duty cycle based on the current carrier-to-noise ratio (which may be represented as CN0), the first duty cycle (which may be represented as x₁), and the minimum value (which may be represented as CN0ₘᵢₙ) of the preset range. As shown in FIG. 15, this may include but is not limited to step s41 to step s43.

s41: Determine a first noise-to-noise ratio difference, where the first noise-to-noise ratio difference is a noise-to-noise ratio difference corresponding to the first duty cycle.

It should be noted that for related descriptions, refer to step s31, and details are not described again.

s42: Determine a second carrier-to-noise ratio difference based on the current carrier-to-noise ratio, the first carrier-to-noise ratio difference, and the minimum value of the preset range.

In an optional implementation, a carrier-to-noise ratio threshold is first determined based on the current carrier-to-noise ratio and the first carrier-to-noise ratio difference. Then, a second difference may be determined based on the current carrier-to-noise ratio and the minimum value of the preset range. Finally, the second carrier-to-noise ratio difference is determined based on the carrier-to-noise ratio threshold and the second difference. The second difference is a difference between the current carrier-to-noise ratio and the minimum value of the preset range.

Optionally, the second carrier-to-noise ratio difference may be specifically determined by using the following formula: ${y}_{2} = CN 0 + {y}_{1} - \left(CN0-{CN 0}_{min}\right)$

y₂ represents the second carrier-to-noise ratio difference. CN0 represents the current carrier-to-noise ratio. y₁ represents the first carrier-to-noise ratio difference. CN0ₘᵢₙ represents the minimum value of the preset range.

s43: Determine the second duty cycle, where the second duty cycle is a duty cycle corresponding to the second carrier-to-noise ratio difference.

It should be noted that for related descriptions, refer to step s33, and details are not described again.

It should be noted that in this case, the obtained second duty cycle is greater than the first duty cycle. If the obtained second duty cycle is less than or equal to 100%, when the enable signal with the second duty cycle is used to control the LNA, the carrier-to-noise ratio of the satellite signal is within the preset range. If the obtained second duty cycle is greater than 100%, the obtained second duty cycle is discarded, and a value of the second duty cycle is directly set to 100%. When an enable signal with the 100% duty cycle is used to control the LNA, the carrier-to-noise ratio of the satellite signal is as close to the preset range as possible.

In this embodiment, a correspondence between the duty cycle of the enable signal and the carrier-to-noise ratio difference is obtained through analysis based on historical data, and the second duty cycle may be accurately determined based on the historical data. In addition, the minimum value of the preset range is considered when the second duty cycle is obtained, so that the obtained second duty cycle may be greater than the first duty cycle, and when the enable signal with the second duty cycle is used to control the LNA, the carrier-to-noise ratio of the satellite signal is within the preset range or as close to the preset range as possible. Therefore, impact on the performance benefits of the GNSS receiver can be avoided.

It should be noted that in the foregoing embodiment, the second duty cycle is determined by using the maximum value or the minimum value of the preset range. In another implementation, the second duty cycle may alternatively be determined based on an intermediate value of the preset range. For example, the intermediate value may be represented as CN0_{mid}, where CN0ₘᵢₙ<CN0_{mid}<CN0ₘₐₓ. This is not limited.

**S103: If the second duty cycle is less than the first duty cycle, control the LNA based on the enable signal with the second duty cycle.**

In an optional implementation, step S103 specifically includes: if the second duty cycle is less than the first duty cycle, adjusting the duty cycle of the enable signal from the first duty cycle to the second duty cycle, and controlling the LNA based on the enable signal with the second duty cycle.

It should be noted that when the second duty cycle is greater than or equal to the first duty cycle, the following two optional manners may be performed in this embodiment of this application. (1) Control the LNA directly based on the enable signal with the first duty cycle, without adjusting the duty cycle of the enable signal. In this implementation, the LNA may be controlled by using an enable signal with a lower duty cycle. This helps reduce operating duration of the LNA, reducing the power consumption of the electronic device. (2) Adjust the duty cycle of the enable signal from the first duty cycle to the second duty cycle, and control the LNA based on the enable signal with the second duty cycle. In this implementation, the LNA may be controlled by using the enable signal with the second duty cycle, so that the carrier-to-noise ratio of the satellite signal is within the preset range or as close to the preset range as possible. This avoids the impact on the performance benefits of the GNSS receiver.

Optionally, after step S103 is performed, S102 and S103 may be repeatedly performed (after waiting for a period of time). For example, the LNA is controlled based on the second duty cycle, and a third duty cycle is determined.

In some embodiments, after step S103, the method further includes S104: stopping satellite signal receiving.

Optionally, the electronic device stops satellite signal receiving when a second trigger condition is satisfied. The second trigger condition may include at least one of the following: the location of the electronic device remains unchanged or is in a slight change state in preset duration, or the electronic device detects a disable operation on the positioning function.
(1) For a scenario in which the second trigger condition is that the location of the electronic device remains unchanged or is in the slight change state in the preset duration

If the location of the electronic device remains unchanged or is in the slight change state in the preset duration, it indicates that the location of the electronic device remains unchanged for a long time, a probability that the location of the electronic device changes is low, and the location may be directly recorded without continuously receiving a satellite signal to determine the location. In this case, satellite signal receiving may be stopped. It should be noted that a value of the preset duration is not limited this application. For example, the preset duration may be 5 minutes or 10 minutes.

### (2) For a scenario in which the second trigger condition is that the electronic device detects the disable operation on the positioning function

If the electronic device detects the disable operation on the positioning function, it usually indicates that the user does not need to use the electronic device for positioning. In this case, the electronic device may stop satellite signal receiving. For the disable operation on the positioning function, refer to the enable operation on the positioning function, and details are not described again.

According to the foregoing solution, in this embodiment of this application, when it is determined that the electronic device satisfies the second trigger condition, satellite signal receiving is stopped in time. This can effectively reduce the power consumption of the electronic device.

In this embodiment of this application, when it is detected that the current carrier-to-noise ratio of the satellite signal is outside the preset range, the second duty cycle is determined, and when the enable signal with the second duty cycle is used to control the LNA, the carrier-to-noise ratio of the satellite signal is within the preset range. This can avoid the impact on the performance benefits of the GNSS receiver. In addition, when the second duty cycle is less than the first duty cycle, the duty cycle of the enable signal may be adjusted from the first duty cycle that is high to the second duty cycle that is low, to reduce the power consumption of the electronic device. Therefore, in the solution of this application, operating duration of the LNA in an operating cycle can be reduced without affecting the performance benefits of the GNSS receiver, helping reduce the power consumption of the electronic device without affecting the performance benefits of the GNSS receiver. In addition, compared with a solution in which the enable signal with the first duty cycle is used to control the LNA all the time, in the solution of this application, the duty cycle of the enable signal may be adaptively adjusted, so that the operating duration of the LNA in the operating cycle can be adaptively adjusted. The solution of this application is more flexible and compatible.

In some scenarios, when satellite ephemeris becomes invalid, the electronic device may receive satellite ephemeris from a satellite. This may increase the operating duration of the LNA in the operating cycle (for example, increase the operating duration of the LNA to the entire operating cycle, that is, the duty cycle of the enable signal is 100%). The satellite ephemeris indicates a location of the satellite at each moment recorded by an on-board clock. When the electronic device obtains the location of the satellite, the electronic device may determine the location of the electronic device based on the location of the satellite and a distance between the satellite and the electronic device. Based on this, an embodiment of this application further provides another enable signal control method. As shown in FIG. 16 the enable signal control method includes but is not limited to step S201 to step S203.

**S201: Detect whether satellite ephemeris is valid.**

If the satellite ephemeris is valid, the satellite ephemeris does not need to be updated, and if the satellite ephemeris becomes invalid, the satellite ephemeris needs to be updated. In other words, when the satellite ephemeris is valid, a probability that the satellite ephemeris has an error is low, and the satellite ephemeris does not need to be updated; and when the satellite ephemeris becomes invalid, probability that the satellite ephemeris has an error is high, and updating the satellite ephemeris in time can ensure positioning performance.

In an optional implementation, step S201 includes: determining whether a current moment is within a valid time range of the satellite ephemeris. If the current moment is outside the valid time range of the satellite ephemeris, the satellite ephemeris becomes invalid, the satellite ephemeris needs to be updated, and step S202 is performed; or if the current moment is within the valid time range of the satellite ephemeris, the satellite ephemeris is valid, the satellite ephemeris does not need to be updated, and step S203 is performed. The valid time range is a time period between a moment at which the satellite ephemeris becomes valid and a moment at which the satellite ephemeris becomes invalid. An example in which the moment at which the satellite ephemeris becomes invalid is 2023/11/21/10:00 is used. Optionally, the moment at which the satellite ephemeris becomes valid may be a moment at which the electronic device receives the satellite ephemeris. For example, if the moment at which the electronic device receives the satellite ephemeris is 2023/11/21/9:00, the valid time range is 2023/11/21/9:00 to 2023/11/21/10:00. Optionally, the moment at which the satellite ephemeris becomes valid may alternatively be a moment after a moment at which the electronic device receives the satellite ephemeris. For example, if the moment at which the electronic device receives the satellite ephemeris is 2023/11/21/9:00, and the moment at which the satellite ephemeris becomes valid is 2023/11/21/9:30, the valid time range is 2023/11/21/9: 30 to 2023/11/21/10: 00. It should be noted that the valid time range may be configured by a ground control system, or may be indicated by the satellite, to be sent to the electronic device. This is not limited.

The current moment may include any moment after an electronic device is powered on. For example, the current moment may include a moment at which a current carrier-to-noise ratio of a satellite signal is outside a preset range. In this case, before step S201, the method may further include: controlling an LNA based on an enable signal with a first duty cycle, and when the LNA is controlled by using the enable signal with the first duty cycle, detecting that the current carrier-to-noise ratio of the satellite signal is outside the preset range. For another example, the current moment may alternatively be a moment at which a second duty cycle is determined. In this case, before step S201, the method may further include: controlling an LNA based on an enable signal with a first duty cycle, and if it is detected that a current carrier-to-noise ratio of a satellite signal is outside a preset range, determining the second duty cycle. Optionally, the current moment may alternatively include a moment before an LNA is controlled based on an enable signal with a first duty cycle. This is not limited in this application. It should be noted that subsequent steps are described by using an example in which the current moment is the moment at which the second duty cycle is determined.

**S202: Update the satellite ephemeris.**

In an optional implementation, step S202 may be step S202a, and step S202a may include: controlling the LNA based on an enable signal with a 100% duty cycle, receiving satellite ephemeris from a satellite, and updating the satellite ephemeris based on the received satellite ephemeris. In other words, when the satellite ephemeris stored in the electronic device becomes invalid, the electronic device may receive the satellite ephemeris from the satellite and update the stored satellite ephemeris based on the received satellite ephemeris. For example, when the satellite ephemeris stored in a GNSS receiver of the electronic device becomes invalid, the GNSS receiver may receive the satellite ephemeris from the satellite via an antenna 2, and update the stored satellite ephemeris based on the received satellite ephemeris. When the update of the satellite ephemeris is completed, the satellite ephemeris is valid, and the electronic device may perform step S203. It should be noted that this embodiment of this application is described by using the 100% duty cycle as an example. In another implementation, the 100% duty cycle may alternatively be another high duty cycle, for example, another duty cycle greater than 95% (such as a 98% duty cycle or a 99% duty cycle). This is not limited. In this implementation, the satellite ephemeris may be directly received from the satellite. In addition, when the satellite ephemeris is received from the satellite, the duty cycle of the enable signal may be increased to 100%, to increase operating duration of the LNA to an entire operating cycle. This helps improve a success rate of the electronic device in receiving the satellite ephemeris from the satellite.

In another optional implementation, step S202 may be step S202b, and step S202b may include but is not limited to the following steps.

s51: Detect whether the electronic device is within a mobile communication range.

If the electronic device is within the mobile communication range, the electronic device may directly receive satellite ephemeris from a mobile communication network, and update the satellite ephemeris based on the received satellite ephemeris. This shortens time consumed for updating the satellite ephemeris. If the electronic device is outside the mobile communication range, the electronic device receives satellite ephemeris from a satellite, and updates the satellite ephemeris based on the received satellite ephemeris. This helps the electronic device successfully receive the satellite ephemeris when the electronic device is outside the mobile communication range.

s52a: Receive the satellite ephemeris from the mobile communication network, and update the satellite ephemeris based on the received satellite ephemeris.

It should be noted that when the satellite ephemeris stored in the electronic device becomes invalid, the electronic device may receive the satellite ephemeris from the mobile communication network and update the stored satellite ephemeris based on the received satellite ephemeris. For example, when the satellite ephemeris stored in a GNSS receiver of the electronic device becomes invalid, the GNSS receiver may receive the satellite ephemeris from the mobile communication network via an antenna 1, and update the stored satellite ephemeris based on the received satellite ephemeris. When the update of the satellite ephemeris is completed, the satellite ephemeris is valid, and step S203 may be performed.

Optionally, the mobile communication network may be a mobile communication network provided by a global system for mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced Long Term Evolution, LTE-A) system, a new radio (New Radio, NR) system, an evolved system of the NR system, an LTE-based access to unlicensed spectrum (LTE-based Access to Unlicensed Spectrum, LTE-U) system, an NR-based Access to unlicensed spectrum (NR-based Access to Unlicensed Spectrum, NR-U) system, a non-terrestrial communication network (Non-Terrestrial Network, NTN) system, a universal mobile telecommunication system (Universal Mobile Telecommunication System, UMTS), a wireless local area network (Wireless Local Area Network, WLAN), wireless fidelity (Wireless Fidelity, Wi-Fi), a 6th-generation (6th-Generation, 6G) communication system, or various subsequent evolved communication systems.

s52b: Control the LNA based on an enable signal with a 100% duty cycle, receive satellite ephemeris from a satellite, and update the satellite ephemeris based on the received satellite ephemeris.

It should be noted that when the update of the satellite ephemeris is completed, the satellite ephemeris is valid, and step S203 may be performed. For detailed descriptions of step s52b, refer to step S202a, and details are not described again.

It should be noted that step s52a and step s52b are two parallel steps. If step s52a is performed, step s52b is not performed; or if step s52b is performed, step s52a is not performed.

It should be noted that step S202a and step S202b are two parallel steps. If step S202a is performed, step S202b is not performed; or if step S202b is performed, step S202a is not performed.

**S203: If the second duty cycle is less than the first duty cycle, control the LNA based on an enable signal with the second duty cycle.**

It should be noted that for related descriptions, refer to the related embodiment in FIG. 10, and details are not described again.

Optionally, after step S203 is performed, S201 to S203 may be repeatedly performed (or after waiting for a period of time). This is not limited.

In this embodiment of this application, whether the satellite ephemeris is valid may be detected. When the satellite ephemeris becomes invalid, and the satellite ephemeris needs to be received from the satellite, the duty cycle of the enable signal may be increased to 100%, to increase the operating duration of the LNA to the entire operating cycle, improving the success rate of the electronic device in receiving the satellite ephemeris from the satellite.

It should be noted that in embodiments of this application, the steps in FIG. 10 to FIG. 16 may be performed by the electronic device, or may be performed by an apparatus in the electronic device, for example, may be performed by at least one of a controller, an antenna, the amplifier, and the GNSS receiver in the electronic device. This is not limited in this application.

It should be noted that embodiments of this application are described by using an enable signal for controlling the LNA as an example. In another implementation, the enable signal may alternatively be an enable signal for controlling both the LNA and the GNSS receiver, and details are not described again.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art can understand that all or some of the procedures of the methods in the foregoing embodiments may be implemented by a computer program instructing related hardware. The program may be stored in a computer-readable storage medium. When the program is executed, the procedures in the foregoing method embodiments may be included. The foregoing storage medium includes any medium that can store program code, such as a ROM, a random access memory RAM, a magnetic disk, or an optical disc.

## Claims

1. An enable signal control method, wherein the method comprises:
controlling an amplifier based on an enable signal with a first duty cycle;
determining a second duty cycle when it is detected that a current carrier-to-noise ratio of a satellite signal is outside a preset range, wherein when an enable signal with the second duty cycle is used to control the amplifier, a carrier-to-noise ratio of the satellite signal is within the preset range; and
if the second duty cycle is less than the first duty cycle, controlling the amplifier based on the enable signal with the second duty cycle.

2. The method according to claim 1, wherein determining the second duty cycle comprises:
if the current carrier-to-noise ratio is greater than a maximum value of the preset range, obtaining the second duty cycle based on the current carrier-to-noise ratio, the first duty cycle, and the maximum value of the preset range.

3. The method according to claim 2, wherein obtaining the second duty cycle based on the current carrier-to-noise ratio, the first duty cycle, and the maximum value of the preset range comprises:
determining a first carrier-to-noise ratio difference, wherein the first carrier-to-noise ratio difference is a carrier-to-noise ratio difference corresponding to the first duty cycle;
determining a second carrier-to-noise ratio difference based on the current carrier-to-noise ratio, the first carrier-to-noise ratio difference, and the maximum value of the preset range; and
determining the second duty cycle, wherein the second duty cycle is a duty cycle corresponding to the second carrier-to-noise ratio difference, wherein
a carrier-to-noise ratio difference is a difference between a carrier-to-noise ratio threshold and a carrier-to-noise ratio in a same scenario, the carrier-to-noise ratio threshold is a carrier-to-noise ratio corresponding to a 100% duty cycle, and the carrier-to-noise ratio difference comprises the first carrier-to-noise ratio difference and the second carrier-to-noise ratio difference.

4. The method according to claim 3, wherein determining the second carrier-to-noise ratio difference based on the current carrier-to-noise ratio, the first carrier-to-noise ratio difference, and the maximum value of the preset range comprises:
determining a carrier-to-noise ratio threshold based on the current carrier-to-noise ratio and the first carrier-to-noise ratio difference;
determining a first difference based on the maximum value of the preset range and the current carrier-to-noise ratio, wherein the first difference is a difference between the maximum value of the preset range and the current carrier-to-noise ratio; and
determining the second carrier-to-noise ratio difference based on the carrier-to-noise ratio threshold and the first difference.

5. The method according to any one of claims 1 to 4, wherein the method further comprises:
detecting whether a satellite ephemeris is valid; and
if the satellite ephemeris is invalid, updating the satellite ephemeris; or
if the satellite ephemeris is valid, controlling the amplifier based on the enable signal with the second duty cycle when the second duty cycle is less than the first duty cycle.

6. The method according to claim 5, wherein updating the satellite ephemeris comprises:
controlling the amplifier based on an enable signal with the 100% duty cycle; and
receiving satellite ephemeris from a satellite, and updating the satellite ephemeris based on the received satellite ephemeris.

7. The method according to claim 5, wherein updating the satellite ephemeris comprises:
detecting whether an electronic device is within a mobile communication range;
if the electronic device is outside the mobile communication range, controlling the amplifier based on an enable signal with the 100% duty cycle; and
receiving satellite ephemeris from a satellite, and updating the satellite ephemeris based on the received satellite ephemeris.

8. The method according to claim 7, wherein after detecting whether the electronic device is within the mobile communication range, the method further comprises:
if the electronic device is within the mobile communication range, receiving satellite ephemeris from a mobile communication network, and updating the satellite ephemeris based on the received satellite ephemeris.

9. The method according to claim 1, wherein after determining the second duty cycle, the method further comprises:
if the second duty cycle is greater than or equal to the first duty cycle, controlling the amplifier based on the enable signal with the first duty cycle.

10. The method according to claim 1, wherein after determining the second duty cycle, the method further comprises:
if the second duty cycle is greater than or equal to the first duty cycle, controlling the amplifier based on the enable signal with the second duty cycle.

11. The method according to claim 9 or 10, wherein determining the second duty cycle comprises:
if the current carrier-to-noise ratio is less than a minimum value of the preset range, obtaining the second duty cycle based on the current carrier-to-noise ratio, the first duty cycle, and the minimum value of the preset range.

12. An electronic device, comprising a controller, wherein
the controller is configured to control an amplifier based on an enable signal with a first duty cycle;
the controller is configured to determine a second duty cycle when it is detected that a current carrier-to-noise ratio of a satellite signal is outside a preset range, wherein when an enable signal with the second duty cycle is used to control the amplifier, a carrier-to-noise ratio of the satellite signal is within the preset range; and
if the second duty cycle is less than the first duty cycle, the controller is configured to control the amplifier based on the enable signal with the second duty cycle.

13. The electronic device according to claim 12, wherein that the controller is configured to determine the second duty cycle comprises:
if the current carrier-to-noise ratio is greater than a maximum value of the preset range, the controller is configured to obtain the second duty cycle based on the current carrier-to-noise ratio, the first duty cycle, and the maximum value of the preset range.

14. The electronic device according to claim 13, wherein that the controller is configured to obtain the second duty cycle based on the current carrier-to-noise ratio, the first duty cycle, and the maximum value of the preset range comprises:
the controller is configured to determine a first carrier-to-noise ratio difference, wherein the first carrier-to-noise ratio difference is a carrier-to-noise ratio difference corresponding to the first duty cycle;
the controller is configured to determine a second carrier-to-noise ratio difference based on the current carrier-to-noise ratio, the first carrier-to-noise ratio difference, and the maximum value of the preset range; and
the controller is configured to determine the second duty cycle, wherein the second duty cycle is a duty cycle corresponding to the second carrier-to-noise ratio difference, wherein
a carrier-to-noise ratio difference is a difference between a carrier-to-noise ratio threshold and a carrier-to-noise ratio in a same scenario, the carrier-to-noise ratio threshold is a carrier-to-noise ratio corresponding to a 100% duty cycle, and the carrier-to-noise ratio difference comprises the first carrier-to-noise ratio difference and the second carrier-to-noise ratio difference.

15. The electronic device according to claim 14, wherein that the controller is configured to determine the second carrier-to-noise ratio difference based on the current carrier-to-noise ratio, the first carrier-to-noise ratio difference, and the maximum value of the preset range comprises:
the controller is configured to determine a carrier-to-noise ratio threshold based on the current carrier-to-noise ratio and the first carrier-to-noise ratio difference;
the controller is configured to determine a first difference based on the maximum value of the preset range and the current carrier-to-noise ratio, wherein the first difference is a difference between the maximum value of the preset range and the current carrier-to-noise ratio; and
the controller is configured to determine the second carrier-to-noise ratio difference based on the carrier-to-noise ratio threshold and the first difference.

16. The electronic device according to claim 12, wherein after the controller is configured to determine the second duty cycle,
if the second duty cycle is greater than or equal to the first duty cycle, the controller is configured to control the amplifier based on the enable signal with the first duty cycle.

17. The electronic device according to claim 12, wherein after the controller is configured to determine the second duty cycle,
if the second duty cycle is greater than or equal to the first duty cycle, the controller is configured to control the amplifier based on the enable signal with the second duty cycle.

18. The electronic device according to claim 16 or 17, wherein that the controller is configured to determine the second duty cycle comprises:
if the current carrier-to-noise ratio is less than a minimum value of the preset range, the controller is configured to obtain the second duty cycle based on the current carrier-to-noise ratio, the first duty cycle, and the minimum value of the preset range.

19. The electronic device according to any one of claims 12 to 18, wherein the electronic device further comprises an antenna, and the antenna is configured to receive the satellite signal.

20. The electronic device according to any one of claims 12 to 18, wherein the electronic device further comprises the amplifier, and the amplifier is configured to perform amplification processing on the satellite signal.

21. The electronic device according to any one of claims 12 to 18, wherein the electronic device further comprises a global navigation satellite system receiver, and the global navigation satellite system receiver is configured to detect the carrier-to-noise ratio of the satellite signal.

22. The electronic device according to claim 21, wherein
the global navigation satellite system receiver is configured to detect whether satellite ephemeris is valid; and
if the satellite ephemeris is invalid, the global navigation satellite system receiver is configured to update the satellite ephemeris; or
if the satellite ephemeris is valid, the controller is configured to control the amplifier based on the enable signal with the second duty cycle when the second duty cycle is less than the first duty cycle.

23. The electronic device according to claim 22, wherein that the global navigation satellite system receiver is configured to update the satellite ephemeris comprises:
after the controller is configured to control the amplifier based on the enable signal with the 100% duty cycle, the global navigation satellite system receiver is configured to: receive satellite ephemeris from a satellite via an antenna, and update the satellite ephemeris based on the received satellite ephemeris.

24. The electronic device according to claim 22, wherein that the global navigation satellite system receiver is configured to update the satellite ephemeris comprises:
the global navigation satellite system receiver is configured to detect whether the electronic device is within a mobile communication range; and
if the electronic device is outside the mobile communication range, after the controller is configured to control the amplifier based on the enable signal with the 100% duty cycle, the global navigation satellite system receiver is configured to: receive satellite ephemeris from a satellite via an antenna, and update the satellite ephemeris based on the received satellite ephemeris.

25. The electronic device according to claim 24, wherein after the global navigation satellite system receiver is configured to detect whether the electronic device is within the mobile communication range, the global navigation satellite system receiver is further configured to:
if the electronic device is within the mobile communication range, receive satellite ephemeris from a mobile communication network via the antenna, and update the satellite ephemeris based on the received satellite ephemeris.

26. A computer-readable storage medium, comprising computer instructions, wherein when the computer instructions are run on an electronic device, the electronic device is enabled to perform the method according to any one of claims 1 to 11.

27. A chip or a chip system, comprising a processing circuit and an interface circuit, wherein the interface circuit is configured to: receive code instructions, and transmit the code instructions to the processing circuit; and the processing circuit is configured to run the code instructions to perform the method according to any one of claims 1 to 11.
